(19) Europäisches Patentamt
European Patent Office
Office européen des brevets

(11) **EP 4 152 215 A1**

(12) **EUROPEAN PATENT APPLICATION**
published in accordance with Art. 153(4) EPC

(43) Date of publication:
**22.03.2023 Bulletin 2023/12**

(51) International Patent Classification (IPC):
***G06N 10/00*** *(2019.01)*

(21) Application number: **21930595.0**

(86) International application number:
**PCT/CN2021/126485**

(22) Date of filing: **26.10.2021**

(87) International publication number:
**WO 2023/010694 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.08.2021 CN 202110879983**

(71) Applicant: **Tencent Technology (Shenzhen) Company Limited**
**Shenzhen, Guangdong 518057 (CN)**

(72) Inventors:
• **YUAN, Pei**
**Shenzhen, Guangdong 518057 (CN)**
• **YANG, Shuai**
**Shenzhen, Guangdong 518057 (CN)**
• **TIAN, Guojing**
**Shenzhen, Guangdong 518057 (CN)**
• **SUN, Xiaoming**
**Shenzhen, Guangdong 518057 (CN)**
• **ZHANG, Shengyu**
**Shenzhen, Guangdong 518057 (CN)**

(74) Representative: **EP&C**
**P.O. Box 3241**
**2280 GE Rijswijk (NL)**

(54) **QUANTUM STATE PREPARATION CIRCUIT GENERATION METHOD AND APPARATUS, CHIP, DEVICE, AND PROGRAM PRODUCT**

(57) A quantum state preparation circuit generation method and apparatus, a chip, a device, and a program product are provided, which relate to the field of quantum technology. The quantum state preparation circuit generation method includes: obtaining a target vector (21); generating a quantum state intermediate preparation circuit (22) for preparing the target vector on N qubits, the quantum state intermediate preparation circuit including N qubit uniform control gates, and N being a positive integer greater than or equal to 2; and respectively converting each of the N qubit uniform control gates into a diagonal unitary matrix and a single bit gate, to obtain a quantum state preparation circuit (23) for preparing the target vector on the N qubits. This application can reduce a depth of a quantum state preparation circuit.

FIG. 2

**Description**

RELATED APPLICATION

This application claims priority to Chinese Patent Application 202110879983.0, filed on August 2, 2021 and entitled "QUANTUM STATE PREPARATION CIRCUIT GENERATION METHOD AND APPARATUS, QUANTUM OPERATION CHIP, AND DEVICE", which is incorporated herein by reference in its entirety.

FIELD OF THE TECHNOLOGY

Embodiments of this application relate to the field of quantum technology, and in particular, to a quantum state preparation circuit generation method and apparatus, a chip, a device, and a program product.

BACKGROUND OF THE DISCLOSURE

Quantum state preparation refers to a process of loading classical information into a quantum computing device.
The physical implementation of a quantum system is decoherent. That is, the coherence of the quantum system gradually disappears over time, and the quantum system eventually degenerates into a classical system. To prevent decoherence, a quantum circuit needs to be designed with as short execution time as possible.
Currently, a circuit depth of a quantum state preparation circuit that has been implemented is $O(2^N)$, where N is a quantity of qubits. For the quantum system, a depth of the quantum state preparation circuit still has a relatively large room for improvement.

SUMMARY

Embodiments of this application provide a quantum state preparation method and apparatus, a chip, a device, and a program product, which can construct a quantum state preparation circuit with a circuit depth close to a lower bound of a theoretical depth. The technical solutions are as follows:
According to an aspect of the embodiments of this application, a quantum state preparation circuit generation method is provided, including:

obtaining a target vector;

generating a quantum state intermediate preparation circuit for preparing the target vector on N qubits, the quantum state intermediate preparation circuit including N qubit uniform control gates, and N being a positive integer greater than or equal to 2; and

respectively converting each of the N qubit uniform control gates into a diagonal unitary matrix and a single bit gate, to obtain a quantum state preparation circuit for preparing the target vector on the N qubits,

the diagonal unitary matrix being implemented in a recursive manner by a unitary operator of a first type and a unitary operator of a second type; the unitary operator of the first type being used for performing phase shift on quantum states of n qubits, and the unitary operator of the second type being used for restoring quantum states of last $r_t$ qubits in the n qubits to quantum states in a case that the diagonal unitary matrix is inputted; and the n qubits being qubits corresponding to the diagonal unitary matrix, $1 \le r_t \le n \le N$, and $r_t$ and n being integers.

According to an aspect of the embodiments of this application, a quantum state preparation method is provided, including:

obtaining a quantum state preparation circuit, the quantum state preparation circuit being obtained by respectively converting N qubit uniform control gates into a diagonal unitary matrix and a single bit gate in a quantum state intermediate preparation circuit that prepares a target vector on N qubits, the diagonal unitary matrix being implemented in a recursive manner by a unitary operator of a first type and a unitary operator of a second type, the unitary operator of the first type being used for performing phase shift on quantum states of n qubits, and the unitary operator of the second type being used for restoring quantum states of last $r_t$ qubits in the n qubits to quantum states in a case that the diagonal unitary matrix is inputted; and the n qubits being qubits corresponding to the diagonal unitary matrix, $1 \le r_t \le n \le N$, and $r_t$ and n being integers; and

executing the quantum state preparation circuit on a quantum computing device including the N qubits.

According to an aspect of the embodiments of this application, a quantum state preparation circuit generation apparatus is provided, including:

a vector obtaining module, configured to obtain a target vector;

an intermediate circuit generation module, configured to generate a quantum state intermediate preparation circuit for preparing the target vector on N qubits, the quantum state intermediate preparation circuit including N qubit uniform control gates, and N being a positive integer greater than or equal to 2; and

a preparation circuit generation module, configured to respectively convert the N qubit uniform control gates into a diagonal unitary matrix and a single bit gate, to obtain a quantum state preparation circuit for preparing the target vector on the N qubits,

the diagonal unitary matrix being implemented in a recursive manner by a unitary operator of a first type and a unitary operator of a second type; the unitary operator of the first type being used for performing phase shift on quantum states of n qubits, and the unitary operator of the second type being used for restoring quantum states of last $r_t$ qubits in the n qubits to quantum states in a case that the diagonal unitary matrix is inputted; and the n qubits being qubits corresponding to the diagonal unitary matrix, $1 \leq r_t \leq n \leq N$, and $r_t$ and n being integers.

According to an aspect of the embodiments of this application, a quantum state preparation apparatus is provided, including:

a circuit obtaining module, configured to obtain a quantum state preparation circuit, the quantum state preparation circuit being obtained by respectively converting N qubit uniform control gates into a diagonal unitary matrix and a single bit gate in a quantum state intermediate preparation circuit that prepares a target vector on N qubits, the diagonal unitary matrix being implemented in a recursive manner by a unitary operator of a first type and a unitary operator of a second type, the unitary operator of the first type being used for performing phase shift on quantum states of n qubits, and the unitary operator of the second type being used for restoring quantum states of last $r_t$ qubits in the n qubits to quantum states in a case that the diagonal unitary matrix is inputted; and the n qubits being qubits corresponding to the diagonal unitary matrix, $1 \leq r_t \leq n \leq N$, and $r_t$ and n being integers; and

a circuit execution module, configured to execute the quantum state preparation circuit on a quantum computing device including the N qubits.

According to an aspect of the embodiments of this application, a quantum operation chip is provided, the quantum operation chip being configured to implement the quantum state preparation circuit generation method or the quantum state preparation method as described above.

According to an aspect of the embodiments of this application, a computer device is provided, including the quantum operation chip as described above.

According to an aspect of the embodiments of this application, a computer device is provided, including a processor and a memory, the memory storing at least one computer instruction, the at least one computer instruction being executed by the processor to implement the quantum state preparation circuit generation method or implement the quantum state preparation method as described above.

According to an aspect of the embodiments of this application, a quantum computer is provided, being configured to implement the quantum state preparation method as described above.

According to an aspect of the embodiments of this application, a computer-readable storage medium is provided, storing at least one computer instruction, the at least one computer instruction being executed by a processor to implement the quantum state preparation circuit generation method or the quantum state preparation method as described above.

According to an aspect of the embodiments of this application, a computer program product is provided, including computer instructions, the computer instructions being executed by a processor to implement the quantum state preparation circuit generation method or the quantum state preparation method as described above.

The technical solutions provided in the embodiments of this application include at least the following beneficial effects:

based on a quantum state intermediate preparation circuit including N qubit uniform control gates, each of the qubit uniform control gates is respectively converted into a diagonal unitary matrix and a single bit gate. Through the unitary operator of the first type and the unitary operator of the second type, the diagonal unitary matrix is implemented in a recursive manner, and a quantum state preparation circuit with a circuit depth close to a lower bound of a theoretical depth can be constructed, thereby reducing a depth of the quantum state preparation circuit.

BRIEF DESCRIPTION OF THE DRAWINGS

To describe the technical solutions in the embodiments of this application more clearly, the following briefly introduces the accompanying drawings required for describing the embodiments. Apparently, the accompanying drawings in the following description show only some embodiments of this application, and a person of ordinary skill in the art may still derive other accompanying drawings from the accompanying drawings without creative efforts.

FIG. 1 is a schematic diagram of an application scenario of a solution according to an embodiment of this application.

FIG. 2 is a flowchart of a quantum state preparation circuit generation method according to an embodiment of this application.

FIG. 3 is a frame diagram of a quantum state intermediate preparation circuit involved in the embodiment shown in FIG. 2.

FIG. 4 is a flowchart of a quantum state preparation circuit generation method according to an embodiment of this application.

FIG. 5 is a design frame diagram of a diagonal unitary matrix circuit involved in the embodiment shown in FIG. 4.

FIG. 6 is a schematic structural diagram of an operator $\mathcal{G}_k$ involved in the embodiment shown in FIG. 4.

FIG. 7 is a flowchart of a quantum state preparation method according to an embodiment of this application.

FIG. 8 is a block diagram of a quantum state preparation circuit generation apparatus according to an embodiment of this application.

FIG. 9 is a block diagram of a quantum state preparation apparatus according to an embodiment of this application.

FIG. 10 is a structural block diagram of a computer device according to an embodiment of this application.

DESCRIPTION OF EMBODIMENTS

To make the objectives, technical solutions, and advantages of this application clearer, the following further describes implementations of this application in detail with reference to the accompanying drawings.
Before embodiments of this application are described, some terms involved in this application are explained first.

1) Quantum computation (QC): QC is a computing manner of using properties such as superposition and entanglement of quantum states to rapidly complete a computation task.
2) Quantum bit (Qubit): Qubits are a form of carrying quantum information.
3) Quantum operation: A quantum operation refers to perform manipulation on the qubits to process the quantum information carried by the qubits. Common quantum operations include Pauli $X$, $Y$, $Z$ transformation (or written as $\sigma_x$, $\sigma_y$, $\sigma_z$), Hadamard transformation ($H$), controlled Pauli X transformation, that is, a controlled-NOT gate CNOT, or the like. Only a single bit operation and a two-bit operation may be used to complete any quantum computation, and are abbreviated as operations at some positions below.
4) Quantum circuit: A quantum circuit is a description model of the quantum computation, including the qubits and the quantum operations on the qubits. The quantum circuit includes a sequence of quantum gates, and computation is performed by the quantum gates.
5) Quantum computing device: A quantum computing device is a physical device that performs the quantum computation.
6) Quantum state preparation with no auxiliary bit: Definition of a question of the quantum state preparation with no auxiliary bit is as follows: Given any complex vector $v = (v_0, v_1, ..., v_{2^N-1}) \in \mathbb{C}^{2^N}$ that satisfies $\|v\|_2 = 1$, and given an initial state $|0\rangle^{\otimes N}$, a quantum state of $N$ bits is prepared with no auxiliary bit:

$$|\psi_v\rangle = \sum_{k=0}^{2^N-1} v_k|k\rangle$$

$\{|k\rangle : k = 0, 1, ..., 2^N - 1\}$ is a set of computing bases for a quantum system. In the design of a quantum state preparation circuit, any single bit quantum gate and CNOT gate are allowed to be used. $\mathbb{C}^{2^N}$ represents a set of complex vectors with a length of $2^N$. In the quantum computation, a unit vector with a length of $2^N$ may be prepared in a quantum state of $N$ qubits.

Current research indicates that a lower bound of a depth of the quantum state preparation circuit is $\Omega(2^N/N)$. $\Omega(\cdot)$ is asymptotic lower bound notation, the meaning of $f(N) = \Omega\left(\frac{2^N}{N}\right)$ is that there is a constant sum $c > 0$ and $N_0 > 0$, and for any $N \geq N_0$, $f(N)$ satisfies $f(N) \geq c \cdot \frac{2^N}{N}$.

7) Basic symbols: For ease of understanding, this application defines the following basic symbols:

$[n]$ represents a set $\{1, 2, ..., n\}$. $\mathbb{F}_2$ represents a binary domain. Any $x = (x_1, ..., x_n)^T, y = (y_1, ..., y_n)^T \in \{0,1\}^n$, $x \oplus y = (x_1 \oplus y_1, ..., x_n \oplus y_n)^T$, and an inner product $\langle x, y \rangle = \bigoplus_{i=1}^n x_i y_i$, where both addition and multiplication are defined on the binary field. $0^n$ and $1^n$ respectively represent vectors with a length of $n$ and elements such as $n$ and 1. $\{0,1\}^n$ is a set of vectors with a length of $n$ and including 0 or 1. In some cases, $\{0,1\}^n$ also represents a set of bit strings with the length of n. $e_i$ represents a vector whose $i^{th}$ element is 1 and other elements are 0.

Some basic quantum gates involved in this application are shown in Table 1 below, where IR is a set of real numbers.

Table 1

| Name | Definitions | Parameter |
|---|---|---|
| Rotation gate $R_y(\theta)$ | $\begin{bmatrix} \cos(\theta/2) & -\sin(\theta/2) \\ \sin(\theta/2) & \cos(\theta/2) \end{bmatrix}$ | $\theta \in \mathbb{R}$ |
| Rotation gate $R_Z(\theta)$ | $\begin{bmatrix} e^{-i\theta/2} & \\ & e^{i\theta/2} \end{bmatrix}$ | $\theta \in \mathbb{R}$ |
| Rotation gate $R(\theta)$ | $\begin{bmatrix} 1 & \\ & e^{i\theta} \end{bmatrix}$ | $\theta \in \mathbb{R}$ |
| Hadamard gate $H$ | $\frac{1}{\sqrt{2}}\begin{bmatrix} 1 & 1 \\ 1 & -1 \end{bmatrix}$ | Null |
| Phase gate $S$ | $\begin{bmatrix} 1 & \\ & i \end{bmatrix}$ | Null |
| CNOT gate | $\begin{bmatrix} 1 & & & \\ & 1 & & \\ & & & 1 \\ & & 1 & \end{bmatrix}$ | Null |

(continued)

| Name | Definitions | Parameter |
|---|---|---|
| $n$ qubit uniform control gate $V_n$ | $\begin{bmatrix} U_1 & & & \\ & U_2 & & \\ & & \ddots & \\ & & & U_{2^{n-1}} \end{bmatrix}$ | $\forall k \in [2^{n-1}]$, and $U_k \in \mathbb{C}^{2\times2}$ is a unitary matrix |
| $n$ qubit diagonal unitary matrix $\Lambda_n$ | $\begin{bmatrix} 1 & & & \\ & e^{i\theta_1} & & \\ & & \ddots & \\ & & & e^{i\theta_{2^n-1}} \end{bmatrix}$ | $\theta_1, \theta_2, \dots, \theta_{2^n-1} \in \mathbb{R}$ |

8) Decomposition of a single bit quantum gate. For any single bit quantum gate $U \in \mathbb{C}^{2\times2}$, there are real numbers $\alpha, \beta, \gamma, \delta \in \mathbb{R}$, and $U$ may be decomposed into the following form:

$$U = e^{i\alpha} R_z(\beta) S H R_z(\gamma) H S^\dagger R_z(\delta) \quad (1.)$$

9) $i$-Gray code cycle. The Gray code circle is a sequence of all $n$-bit strings (that is, a bit string with n bits) in $\{0,1\}^n$, which satisfies that one bit in two adjacent bit strings differs, and one bit in a first bit string and one bit in a last bit string are different.

The construction of the Gray code circle is not unique. For any $i \in [n]$, $c_1^i, c_2^i, \dots, c_{2^n-1}^i, c_{2^n}^i$ is enabled to represent $n$ bit string sequence, and for any $i \in$ [n], $c_1^i = 0^n$. For any $j \in \{2,3, \dots, 2^n\}$, $h_{ij}$ represents subscripts of different bits of $c_{j-1}^i$ and $c_j^i$. $h_{i1}$ is enabled to represent subscripts of different bits of $c_1^i$ and $c_{2^n}^i$, and then:

$$h_{ij} = \begin{cases} r_c, & \text{if } i = j = 1 \\ i - 1, & \text{if } i \in \{2,3,\dots,n\} \text{ and } j = 1 \\ \max\{k: 2^k | 2(j-1)\}, & \text{if } i = 1 \text{ and } j \in \{2,3,\dots,2^n\} \\ h_{1j} + i - 1, & \text{if } h_{1j} + i - 1 \le n \text{ and } j \in \{2,3,\dots,2^n\} \\ h_{1j} + i - 1 - r_c, & \text{if } h_{1j} + i - 1 > n \text{ and } j \in \{2,3,\dots,2^n\} \end{cases} \quad (2.)$$

The binary code $c_1^i, c_2^i, \dots, c_{2^n-1}^i, c_{2^n}^i$ is the Gray code circle. In this embodiment of this application, the bit string sequence $c_1^i, c_2^i, \dots, c_{2^n-1}^i, c_{2^n}^i$ may be referred to as $(i,n)$-Gray code circle, and may also be referred to as $i$-Gray code circle for short.

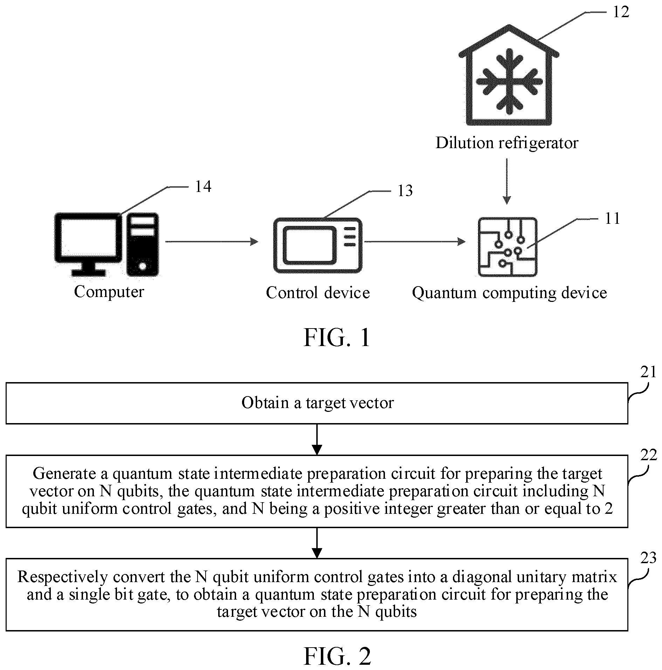

FIG. 1 is a schematic diagram of an application scenario of a solution according to an embodiment of this application. As shown in FIG. 1, the application scenario may be a superconducting quantum computing platform, and the application scenario includes: a quantum computing device 11, a dilution refrigerator 12, a control device 13, and a computer 14.

The quantum computing device 11 is a circuit that is applied on a physical qubit, and the quantum computing device 11 may be implemented as a quantum chip, such as a superconducting quantum chip close to absolute zero. The dilution refrigerator 12 is configured to provide an absolute zero environment for the superconducting quantum chip.

The control device 13 is configured to control the quantum computing device 11, and the computer 14 is configured to control the control device 13. For example, a written quantum program is compiled into instructions by software in the computer 14 and transmitted to the control device 13 (such as an electronic/microwave control system). The control device 13 converts the instructions into an electronic/microwave control signal and inputs the instructions to the dilution refrigerator 12 to control a superconducting qubit at a temperature of lower than 10 mK. A process of reading is reversed, and a read waveform is delivered to the quantum computing device 11.

Before the method embodiment of this application is described, a running environment of the method is described first. The quantum state preparation circuit generation method or the quantum state preparation method provided in this embodiment of this application may be implemented by a classical computer (such as a personal computer (PC), or may also be executed in a hybrid device environment of a classical computer and a quantum computer, or may also be implemented by a quantum computer.

FIG. 2 is a flowchart of a quantum state preparation circuit generation method according to an embodiment of this application. An execution entity of each step of the method may be a computer device. The method may include the following steps:

Step 21. Obtain a target vector.

Step 22. Generate a quantum state intermediate preparation circuit for preparing the target vector on N qubits, the quantum state intermediate preparation circuit including N qubit uniform control gates, and N being a positive integer greater than or equal to 2.

In this embodiment of this application, for a given target vector, a quantum state intermediate preparation circuit including N qubit uniform control gates, and located on N qubits may be generated.

When the quantum state intermediate preparation circuit is executed, the target vector may be prepared on the N qubits. Current research indicates that a circuit depth of the quantum state intermediate preparation circuit is: $O(2^N)$.

Step 23. Respectively convert the N qubit uniform control gates into a diagonal unitary matrix and a single bit gate, to obtain a quantum state preparation circuit for preparing the target vector on the N qubits.

The diagonal unitary matrix is implemented in a recursive manner by a unitary operator of a first type (U operator) and a unitary operator of a second type; the unitary operator of the first type is used for performing phase shift on quantum states of n qubits, and the unitary operator of the second type is used for restoring quantum states of last $r_t$ qubits in the n qubits to quantum states in a case of that the diagonal unitary matrix is inputted; and the n qubits is qubits corresponding to the diagonal unitary matrix, $1 \leq r_t \leq n \leq N$, and $r_t$ and n are integers.

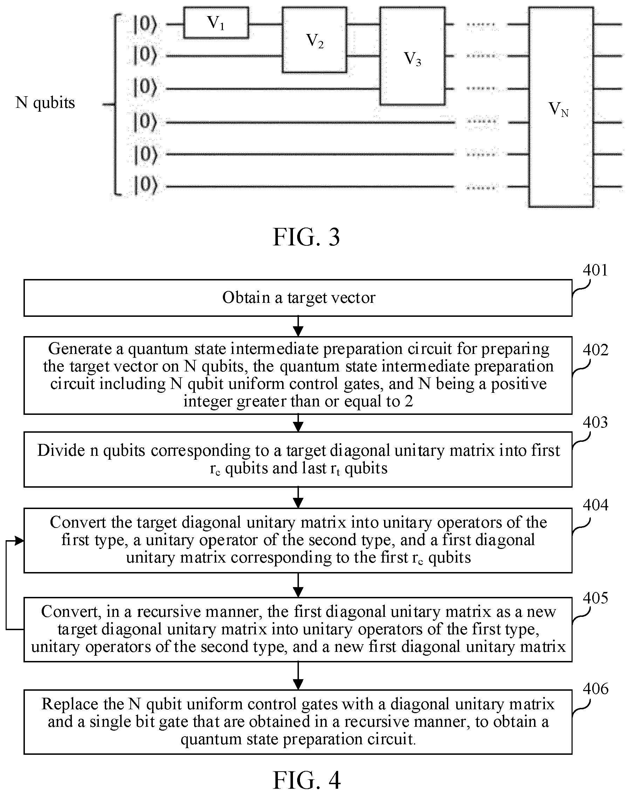

In this embodiment of this application, a frame diagram of the quantum state intermediate preparation circuit may be as shown in FIG. 3.

In the framework of the quantum state preparation circuit involving N qubits shown in FIG. 3, an initial state of the circuit is $|0\rangle^{\otimes N}$. For any $n \in [N]$, $V_n$ represents a uniform control gate for the $n^{th}$ qubit.

According to equation (1), a diagonal submatrix of a uniform control gate $V_n$ for any n qubit may be decomposed as follows:

$$U_k = e^{i\alpha_k}R_z(\beta_k)SHR_z(\gamma_k)HS^{\dagger}R_z(\delta_k), \quad \alpha_k, \beta_k, \gamma_k, \delta_k \in \mathbb{R}, k \in [2^{n-1}]$$

Therefore, the uniform control gate $V_n$ may be decomposed into the following form:

$$V_n = \begin{bmatrix} e^{i\alpha_1} & & & & \\ & e^{i\alpha_1} & & & \\ & & \ddots & & \\ & & & e^{i\alpha_{2^{n-1}}} & \\ & & & & e^{i\alpha_{2^{n-1}}} \end{bmatrix} \cdot \begin{bmatrix} R_z(\beta_1) & & \\ & \ddots & \\ & & R_z(\beta_{2^{n-1}}) \end{bmatrix} \cdot \mathbb{I}_{n-1} \otimes (SH)$$

$$\cdot \begin{bmatrix} R_z(\gamma_1) & & \\ & \ddots & \\ & & R_z(\gamma_{2^{n-1}}) \end{bmatrix} \cdot \mathbb{I}_{n-1} \otimes (HS^{\dagger}) \cdot \begin{bmatrix} R_z(\delta_1) & & \\ & \ddots & \\ & & R_z(\delta_{2^{n-1}}) \end{bmatrix}$$

, where $\mathbb{I}_{n-1}$ represents a unit operator of n - 1 qubits ($\mathbb{I}_{n-1}$ represents an identity matrix with a scale of $2^{n-1} \times$

$2^{n-1}$. In the quantum computation, an operator with a scale of $2^{n-1} \times 2^{n-1}$ may be implemented on n-1 qubits, and therefore the operator is referred to as a unit operator of n-1 qubits). Therefore, an *S* gate and an *H* gate are combined into a single bit gate, a global phase is ignored, and any *n* qubit uniform control gate may include three *n* qubit diagonal unitary matrices $\Lambda_n$ and two single bit gates. When $D(n)$ is enabled to represent no auxiliary bit, a depth of the quantum circuit of $\Lambda_n$ is implemented. A global phase of $V_1, ..., V_N$ may be implemented by a single bit phase gate. It may be learnt from the circuit framework in FIG. 1 that a circuit depth of any *N* bit quantum state preparation circuit is:

$$\sum_{n=1}^{N}(3D(n)+2) + 1 = 3\sum_{n=1}^{N}D(n) + 2N + 1 \quad (3.)$$

It may be seen that in a case that there is no auxiliary bit, provided that a depth of the diagonal unitary matrix $\Lambda_n$ is designed as $O(2^n/_n)$ quantum circuit, a quantum state preparation circuit with a depth of $3\sum_{n=1}^{N}O(2^n/n) + 2N + 1 = O(2^N/N)$ may be directly obtained.

In the solution shown in this application, the $\Lambda_n$ is converted into a diagonal unitary matrix and a single bit gate, and the diagonal unitary matrix is implemented in a recursive manner through the unitary operator of the first type and the unitary operator of the second type, thereby reducing the circuit depth of the quantum state preparation circuit.

In summary, in the solution shown in this embodiment of this application, based on a quantum state intermediate preparation circuit including N qubit uniform control gates, each of the qubit uniform control gates is respectively converted into a diagonal unitary matrix and a single bit gate. Through the unitary operator of the first type and the unitary operator of the second type, the diagonal unitary matrix is implemented in a recursive manner, and a quantum state preparation circuit with a circuit depth close to a lower bound of a theoretical depth can be constructed, thereby reducing a depth of the quantum state preparation circuit.

FIG. 4 is a flowchart of a quantum state preparation circuit generation method according to an embodiment of this application. An execution entity of each step of the method may be a computer device. The method may include the following steps:

Step 401. Obtain a target vector.

The solution shown in this embodiment of this application is a basic step in the quantum algorithm, where optimizing a depth of the quantum state preparation circuit helps to optimize a circuit depth of the quantum algorithm. The quantum state preparation is widely used in quantum machine learning algorithms. For example, in machine learning algorithms such as a quantum support vector machine, quantum least squares fitting, a Boltzmann machine, and quantum linear equation solving, the quantum device needs to read classical data. That is, a data vector $x = (x_1, ..., x_N)^T \in \mathbb{R}^N$

(that is, the target vector) is encoded into a quantum state $|x\rangle = \frac{1}{\sqrt{\|x\|_2}}\sum_{k=1}^{N}x_i|i\rangle$, and the step is the quantum state preparation. In these quantum algorithms, the main cost is the cost spent on the step of the quantum state preparation. Therefore, when the quantum state preparation circuit is optimized, an optimized circuit of the quantum machine learning algorithm may be directly obtained.

Step 402. Generate a quantum state intermediate preparation circuit for preparing the target vector on N qubits, the quantum state intermediate preparation circuit including N qubit uniform control gates, and N being a positive integer greater than or equal to 2.

A framework of the quantum state intermediate preparation circuit may be as shown in FIG. 3, which is not repeated herein.

After the quantum state intermediate preparation circuit is obtained, the N qubit uniform control gates are respectively converted into a diagonal unitary matrix and a single bit gate, to obtain a quantum state preparation circuit for preparing the target vector on the N qubits.

It may be learnt from the Table 1 that the role of the diagonal unitary matrix $\Lambda_n$ is to implement the following transformations on each vector $|x\rangle$ on the computing base:

$$|x\rangle \rightarrow e^{i\theta(x)}|x\rangle, \qquad \forall x \in \{0,1\}^n$$

It is assumed that the following two tasks may be implemented:

1) For any $S \in \{0,1\}^n - \{0^n\}$, $\{0,1\}^n$ represents a set of all bit strings with a length of n, and $\{0,1\}^n - \{0^n\}$ represents a set of all bit strings with a length of n except for $0^n$. When x satisfies $\langle s, x \rangle = 1$, phase shift of $\alpha_s$ is performed on a basis vector $|x\rangle$, that is:

$$|x\rangle \rightarrow \Pi_s e^{i\langle s,x\rangle\alpha_s}|x\rangle$$

2) It is found that $\{\alpha_s : s \in \{0,1\}^n - \{0^n\}\}$ satisfies:

$$\Sigma_s\langle s, x\rangle\alpha_s = \theta(x), \qquad \forall x \in \{0,1\}^n - \{0^n\}\,(4.)$$

For all $s \in \{0,1\}^n - \{0^n\}$, quantum circuits corresponding to a transformation $|x\rangle \rightarrow e^{i\langle s,x\rangle\alpha}{}_s|x\rangle$ are lined up to implement $\Lambda_n$:

$$|x\rangle \rightarrow \Pi_s e^{i\langle s,x\rangle\alpha_s}|x\rangle = e^{i\Sigma_s\langle s,x\rangle\alpha_s}|x\rangle = e^{i\theta(x)}|x\rangle$$

Based on the foregoing principles, for a manner of respectively converting each of the N qubit uniform control gates into the diagonal unitary matrix and the single bit gate, reference may be made to the subsequent steps.

Step 403. Divide n qubits corresponding to a target diagonal unitary matrix into first $r_c$ qubits and last $r_t$ qubits.

A value of $r_c$ is [n/2], and a value of $r_t$ is [n/2]; and the target diagonal unitary matrix is a qubit diagonal unitary matrix obtained by decomposing any one of the qubit uniform control gates. [n/2] represents rounding down to n/2, and [n/2] represents rounding up to n/2.

Step 404. Convert the target diagonal unitary matrix into $\ell$ unitary operators of the first type, a unitary operator of the second type, and a first diagonal unitary matrix corresponding to the first $r_c$ qubits.

$$\ell \leq 4\left\lceil\frac{2^{r_t}}{r_t+1}\right\rceil - 1,$$

and $\ell$ is a positive integer.

Step 405. Convert, in a recursive manner, the first diagonal unitary matrix as a new target diagonal unitary matrix into unitary operators of the first type, unitary operators of the second type, and a new first diagonal unitary matrix.

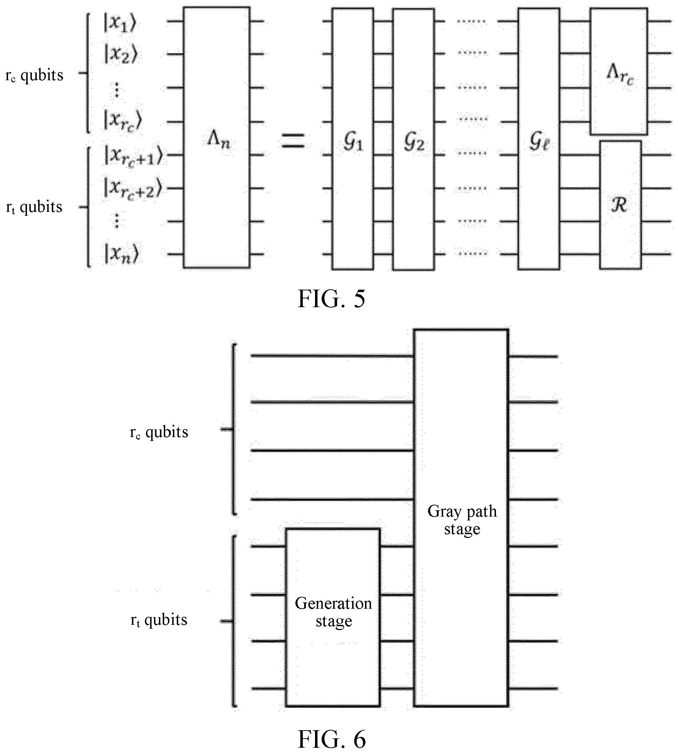

FIG. 5 shows a design frame diagram of a diagonal unitary matrix circuit involved in an embodiment of this application. As shown in FIG. 5, in the quantum circuit framework of the diagonal unitary matrix $\Lambda_n$ with no auxiliary bit, $r_t$ = [n/2], $r_c$ = n - $r_t$ = [n/2], and $\ell \leq 4\left\lceil\frac{2^{r_t}}{r_t+1}\right\rceil - 1$. For any $k \in [\ell]$, a circuit depth of an operator $\mathcal{G}_k$ is $O(2^{r_c})$, and a circuit depth of an operator $\mathcal{R}$ is $O\left(\frac{r_t}{\log r_t}\right)$.

As shown in FIG. 5, an operating register of the n qubits is divided into two parts: a control register includes the first $r_c$ qubits, and the target register includes the last $r_t$ qubits. The quantum circuit of the diagonal unitary matrix $\Lambda_n$ includes the following operators:

1) Unitary operators $\mathcal{G}_1, \mathcal{G}_2, ..., \mathcal{G}_\ell$ of the n-qubit, that is, the unitary operator of the first type; and a structure of the operator is introduced in the subsequent content of this embodiment of this application.

2) A unitary operator $\mathcal{R}$ of the $r_t$-qubit, that is, the unitary operator of the second type, which is used for restoring the target register to an initial state. That is, a quantum state of the target register changes during the execution of the circuit, but as the circuit is executed, the circuit changes to a state during inputting.

3) A diagonal unitary matrix operator $\Lambda_{r_c}$ for $r_c$-qubits. The operator is implemented in a recursive manner in a similar manner to $\Lambda_n$ until there are no unimplemented diagonal unitary matrices.

The parameters are defined as follows:

$$r_t = \lfloor n/2 \rfloor \approx n/2$$

$$r_c = \lceil n/2 \rceil \approx n/2$$

$$\ell = 4\lceil 2^{r_t}/(r_t + 1)\rceil - 1 \approx 2^{\frac{n}{2}+3}/n$$

Functions of operators in the circuit framework in FIG. 5 are induced below. In this embodiment of this application, functions of operators under any computing base are introduced. The any computing base is defined as follows:

$$|x\rangle = \left|x_1 x_2 \cdots x_{r_c} x_{r_c+1} \cdots x_n\right\rangle = \underbrace{|x_{control}\rangle}_{r_c \text{ qubits}} \underbrace{|x_{target}\rangle}_{r_t \text{ qubits}}, \forall x \in \{0,1\}^n$$

, where $x_{control}$ represents $x_1 x_2 \ldots x_{r_c}$, and $x_{target}$ represents $x_{r_c+1} \ldots x_n$.

In this embodiment of this application, the basic idea of the quantum circuit structure is first introduced. For the ease of description, "generating a quantum state $|\langle s,x\rangle\rangle$ on a qubit" is referred to as "generating a bit string $s$ on a qubit". The n-bit string $s \in \{0,1\}^n - \{0^n\}$ is divided into two parts, $s = ct$, where c is referred to as a prefix of an $r_c$ bit, and $t$ is referred to as a suffix of an $r_t$ bit.

In this embodiment of this application, n bit strings may be generated except for $0^n$. $2^{r_t} - 1$ suffixes are divided into $\ell$ sets $T^{(1)}$, $T^{(2)}$, ..., $T^{(\ell)}$, a value of each set is $r_t$, strings in the sets are linearly independent in finite fields $\mathbb{F}_2$, and elemental coincidence between the sets is allowed. $2^{r_t} - 1$ suffixes refer to suffixes except for $0^{r_t}$ in all the bit strings in $\{0,1\}^n - \{0^n\}$. $\ell$ unitary operators $\mathcal{G}_1, \mathcal{G}_2, \ldots, \mathcal{G}_\ell$ correspond to $\ell$ generation stages. In the $k \in [\ell]^{th}$ generation stage, all bit strings with the string in $T^{(k)}$ as a suffix are respectively generated on each qubit of a target register.

The meaning of generating a plurality of bit strings in a stage is that quantum states $|\langle s,x\rangle\rangle$ corresponding to these bit strings $s$ appear in a stage. For example, if three bit strings $s_1$, $s_2$, and $s_3$ need to be generated on a qubit, the meaning is, first $|\langle s_1, x\rangle\rangle$ is generated, then $|\langle s_1,x\rangle\rangle$ is converted into $|\langle s_2,x\rangle\rangle$, and finally $|\langle s_2,x\rangle\rangle$ is converted into $|\langle s_3,x\rangle\rangle$. The process may be referred to as a process of generating three bit strings $s_1$, $s_2$, and $s_3$.

The linear independence of the set $T^{(k)}$ may ensure that transitions between stages may be implemented in a circuit with a low depth. After the first $\ell$ stages are over, a bit string with a suffix of $0^{r_t}$ is generated in a recursive manner, that is $s = c0^{r_t}$.

To describe the function of each operator more clearly, some basic symbols are introduced first.

$$\ell \leq 4\left\lceil \frac{2^{r_t}}{r_t+1} \right\rceil - 1$$

sets $T^{(1)}, T^{(2)}, \ldots, T^{(\ell)}$ that satisfy the following two properties are defined:

$$T^{(k)} = \left\{t_1^{(k)}, t_2^{(k)}, \ldots, t_{r_t}^{(k)}\right\} \subseteq \{0,1\}^{r_t}$$

1) For each $k \in [\ell]$, the set $\qquad$ is linearly independent over a finite field $\mathbb{F}_2$; and

2) The set $T^{(1)}$, $T^{(2)}$, ..., $T^{(\ell)}$ may cover the set $\{0,1\}^{r_t} - \{0^{r_t}\}$, that is, $\bigcup_{k\in[\ell]} T^{(k)} = \{0,1\}^{r_t} - \{0^{r_t}\}$.

A structure of the set $T^{(1)}$, $T^{(2)}$, ..., $T^{(\ell)}$ is introduced in the subsequent content of this application. For each $k \in [\ell] \cup \{0\}$, a quantum state of the $r_t$ bit is defined:

$$|y^{(k)}\rangle = |y_1^{(k)} y_2^{(k)} \cdots y_{r_t}^{(k)}\rangle, \quad y_j^{(k)} = \begin{cases} x_{r_c+j}, & \text{if } k = 0 \\ \langle 0^{r_c} t_j^{(k)}, x\rangle, & \text{if } k \in [\ell] \end{cases} \quad (5.)$$

That is, $y^{(0)}$ and $x_{target}$ are the same, and $y_j^{(k)}$ is a linear function related to $0^{r_c} t_j^{(k)}$. Sets $F_1, F_2, \ldots, F_\ell$ that do not intersect with each other are defined below:

$$\begin{cases} F_1 = \{ct: t \in T^{(1)}, c \in \{0,1\}^{r_c}\} \\ F_k = \{ct: t \in T^{(k)}, c \in \{0,1\}^{r_c}\} - \cup_{d \in [k-1]} F_d, \quad k \in \{2,3,\dots,\ell\} \end{cases} (6.)$$

For any $i \neq j \in [\ell]$, the set $F_1$, $F_2$, ...,$F_\ell$ satisfy $F_i \cap F_j = \varnothing$, and

$$\cup_{k \in [\ell]} F_k = \{0,1\}^{r_c} \times \cup_{k \in [\ell]} T^{(k)} = \{0,1\}^{r_c} \times (\{0,1\}^{r_t} - \{0^{r_t}\})$$

$$= \{0,1\}^n - \{c0^{r_t}: c \in \{0,1\}^{r_c}\}(7.)$$

The effects of operators $\mathcal{G}_k$ , $\mathcal{R}$, and $\Lambda_{r_c}$ are described below, and a structure of the operators is introduced.

For any $k \in [\ell]$,

$$\mathcal{G}_k |x_{control}\rangle |y^{(k-1)}\rangle = e^{i \sum_{s \in F_k} \langle s,x\rangle \alpha_s} |x_{control}\rangle |y^{(k)}\rangle (8.)$$

$\alpha_s$ is determined by equation (4). The operator $\mathcal{G}_k$ has two functions: first, a phase is introduced based on a k-1 stage, that is $e^{i \sum_{s \in F_k} \langle s,x\rangle \alpha_s}$ , and second, a step $k$ - 1 is transited to a step $k$.

The operator $\mathcal{R}$ is applied on the target register, which restores a quantum state corresponding to a suffix to an input state ($y^{(\ell)}$ in equation (8) is defined by the suffix, and therefore, $|y^{(\ell)}\rangle$ is referred to as the quantum state corresponding to the suffix), that is,

$$\mathcal{R}|y^{(\ell)}\rangle = |y^{(0)}\rangle(9.)$$

The operator $\Lambda_{r_c}$ is a diagonal unitary matrix of the $r_c$ qubit, satisfying

$$\Lambda_{r_c}|x_{control}\rangle = e^{i \sum_{c \in \{0,1\}^{r_c} - \{0^{r_c}\}} \langle c0^{r_t}, x\rangle \alpha_{c0^{r_t}}} |x_{control}\rangle(10.)$$

The operator $\Lambda_{r_c}$ is implemented in a recursive manner.

Equation (10) is the definition of the diagonal unitary matrix $\Lambda_{r_c}$ of the $r_c$ qubit. In a structure of a subsequent circuit, $\Lambda_{r_c}$ is a module in a circuit that implements $\Lambda_n$, and a structure of a quantum circuit corresponding to $\Lambda_{r_c}$ is unknown. Implementing $\Lambda_{r_c}$ in a recursive manner refers to the following process:

In the subsequent structure, a circuit of the n qubit diagonal unitary matrix $\Lambda_n$ may be divided into two parts, one part is a designed circuit, and the other part is an undesigned diagonal unitary matrix $\Lambda_{r_c}$ of the $r_c(< n)$ qubit. The diagonal unitary matrix $\Lambda_{r_c}$ may be implemented by the circuit implementation of $\Lambda_n$. That is, a circuit of $\Lambda_{r_c}$ may be divided into two parts, one part is the designed circuit, and the other part is the undesigned diagonal unitary matrix $\Lambda_{r_c^1}$ of the $r_c^1(< r_c)$ qubit. The diagonal unitary matrix $\Lambda_{r_c^1}$ may be decomposed in a similar method until there is no undesigned diagonal unitary matrix in the circuit.

For any input quantum state $|x\rangle$, the quantum circuit may implement the following transformation:

$$|x\rangle = |x_{control}\rangle|y^{(0)}\rangle$$

$$\xrightarrow{\mathcal{G}_1} e^{i\sum_{s\in F_1}\langle s,x\rangle\alpha_s}|x_{control}\rangle|y^{(1)}\rangle$$

$$\xrightarrow{\mathcal{G}_2} e^{i\sum_{s\in F_1\cup F_2}\langle s,x\rangle\alpha_s}|x_{control}\rangle|y^{(2)}\rangle$$

$$\vdots$$

$$\xrightarrow{\mathcal{G}_\ell} e^{i\sum_{s\in\cup_{k\in[\ell]}F_k}\langle s,x\rangle\alpha_s}|x_{control}\rangle|y^{(\ell)}\rangle$$

$$\xrightarrow{\mathbb{I}_{r_c}\otimes\mathcal{R}} e^{i\sum_{s\in\cup_{k\in[\ell]}F_k}\langle s,x\rangle\alpha_s}|x_{control}\rangle|y^{(0)}\rangle$$

$$\xrightarrow{\Lambda_{r_c}\otimes\mathbb{I}_{r_t}} e^{i\sum_{s\in\left(\cup_{k\in[\ell]}F_k\right)\cup\left(\{c0^{r_t}\}_{c\in\{0,1\}^{r_c}-\{0^{r_c}\}}\right)}\langle s,x\rangle\alpha_s}|x_{control}\rangle|y^{(0)}\rangle$$

$$= e^{i\sum_{s\in\{0,1\}^n-\{0^n\}}\langle s,x\rangle\alpha_s}|x_{control}\rangle|y^{(0)}\rangle$$

$$= e^{i\theta(x)}|x_{control}\rangle|y^{(0)}\rangle$$

It is learnt that there is a real number $\alpha > 0$, a circuit depth of the operator $\mathcal{G}_k$ is at most $\alpha \cdot 2^{r_c}$. In addition, there is a real number $\beta > 0$, a circuit depth of the operator $\mathcal{R}$ is at most $\beta \cdot r_t \log r_t$.

Therefore, $D(n)$ satisfies the following recursive formula:

$$D(n) \leq \max\left\{D(r_c), \beta\cdot\frac{r_t}{\log r_t}\right\} + \alpha \cdot 2^{r_c} \cdot \ell$$

$$\leq D(\lceil n/2\rceil) + \beta\cdot\frac{\lceil n/2\rceil}{\log\lceil n/2\rceil} + \alpha\cdot 2^{\lfloor n/2\rfloor}\cdot\left(4\left\lceil\frac{2^{\lfloor n/2\rfloor}}{\lfloor n/2\rfloor + 1}\right\rceil - 1\right)$$

$$= D(\lceil n/2\rceil) + O\left(\frac{2^n}{n}\right)$$

It may be learnt from the recursive formula that $D(n) = O(2^n/n)$.

The unitary operator of the first type includes a generated unitary operator and a Gray path unitary operator; the generated unitary operator is used for converting a computing base into invertible linear transformation over a finite field on the last $r_t$ qubits; and the Gray path unitary operator is used for implementing the phase shift on the quantum states of the n qubits through a Gray code circle whose quantity of bits is $r_c$.

In the structure of the unitary operator of the first type, based on the phase shift being performed on the quantum states in the first $r_c$ qubits, the quantum states of the last $r_t$ qubits may further be restored, so that the quantum state preparation circuit may accurately prepare the quantum states of specific qubits.

FIG. 6 is a schematic structural diagram of an operator $\mathcal{G}_k$ according to an embodiment of this application. As shown in FIG. 6, the operator $\mathcal{G}_k$ includes two stages: a generation stage and a Gray path stage.

The generated unitary operator is used for updating the quantum states of the last $r_t$ qubits through a bit string set T; and the bit string set T includes bit strings with a length of $r_t$ and including elements 0 and 1, and the bit strings included in the bit string set T are linearly independent.

The feature of being linearly independent in the bit strings included in the bit string set T may support the unitary operator of the first type to restore the quantum states of the last $r_t$ qubits.

The generated unitary operator is implemented by a controlled-NOT gate CNOT; and a depth of the generated unitary operator is $O(r_t/\log r_t)$.

This embodiment of this application provides a solution for implementing the generated unitary operator by using an operator with a depth of $O(r_t/\log r_t)$, so that the unitary operator of the first type may restore the quantum states of the last $r_t$ qubits, and may further control the depth of the unitary operator of the first type.

In this embodiment of this application, the unitary operator of the second type is implemented by a CNOT with a depth of $O(r_t/\log r_t)$.

This embodiment of this application provides a solution for implementing the unitary operator of the second type by using an operator with a depth of $O(r_t/\log r_t)$, so that the depth of the unitary operator of the second type may be controlled.

In the generation stage, the operator $U_{Gen}^{(k)}$ implemented by this application satisfies:

$$\left| y^{(k-1)} \right\rangle \xrightarrow{U_{Gen}^{(k)}} \left| y^{(k)} \right\rangle, k \in [\ell] \quad (11.)$$

, where definitions of $y^{(k-1)}$ and $y^{(k)}$ defined in equation (5) and are respectively determined by a set $T^{(k-1)}$ and a set $T^{(k)}$.

For $k \in [\ell] \cup \{0\}$, definition $T^{(k)} = \left\{ t_1^{(k)}, t_2^{(k)}, \dots, t_{r_t}^{(k)} \right\}$ of $T^{(k)}$ is reviewed. An order of elements in the set is fixed. For

any $k \in [\ell]$, a matrix $\hat{T}^{(k)} = \left[ t_1^{(k)}, t_2^{(k)}, \dots, t_{r_t}^{(k)} \right]^T \in \{0,1\}^{r_t \times r_t}$ is defined; and when $k = 0$, $\hat{T}^{(0)} = I \in \{0,1\}^{r_t \times r_t}$.

Therefore, a vector $y^{(k)}$ may be written as:

$$y^{(k)} = \hat{T}^{(k)} x_{target} \quad (12.)$$

Because $t_1^{(k)}, t_2^{(k)}, \dots, t_{r_t}^{(k)}$ are linearly independent over the finite field $\mathbb{F}_2$, $T^{(k)}$ is invertible over the

finite field $\mathbb{F}_2$. The unitary operator is defined:

$$U_{Gen}^{(k)} |y\rangle = \left| \hat{T}^{(k)} \left( \hat{T}^{(k-1)} \right)^{-1} y \right\rangle$$

The matrix vector multiplication on the right-hand side of the equation is defined over the finite field $\mathbb{F}_2$. It may be obtained from equation (12):

$$U_{Gen}^{(k)} \left| y^{(k-1)} \right\rangle = \left| \hat{T}^{(k)} \left( \hat{T}^{(k-1)} \right)^{-1} y^{(k-1)} \right\rangle = \left| \hat{T}^{(k)} x_{target} \right\rangle = \left| y^{(k)} \right\rangle$$

Equation (11) is satisfied. In addition, $U_{Gen}^{(k)}$ converts the computing base into invertible linear transformation over the finite field $\mathbb{F}_2$. Therefore, assuming that $U$ is a unitary matrix that performs permutation on the computing base, as a mapping on the computing base, $U$ is invertible linear transformation over the finite field $\mathbb{F}_2$. Then, with no auxiliary bit, $U$ may be implemented by a CNOT quantum circuit with a circuit depth of at most $O(n/\log n)$.

That is, with no auxiliary bit, the generation stage $U_{Gen}^{(k)}$ may be implemented by a CNOT circuit with a depth of $O(r_t/\log r_t)$.

Similar to the discussion of the operator $U_{Gen}^{(k)}$, the operator $\mathcal{R}$ may be defined as:

$$\mathcal{R}|y\rangle = |\left(\hat{T}^{(\ell)}\right)^{-1} y\rangle$$

Then,

$$\mathcal{R}|y^{(\ell)}\rangle = |\left(\hat{T}^{(\ell)}\right)^{-1} y^{(\ell)}\rangle = |x_{target}\rangle = |y^{(0)}\rangle$$

Therefore, the operator $\mathcal{R}$ is invertible linear transformation over the finite field $\mathbb{F}_2$. Therefore, with no auxiliary bit, the operator $\mathcal{R}$ may be implemented by a CNOT circuit with a depth of $0(r_t/\log r_t)$.

In addition, in this application, there is a set $T^{(1)}, T^{(2)}, ..., T^{(\ell)} \subseteq \{0,1\}^{r_t} - \{0^{r_t}\}$. For a specific integer $\ell \leq 4 \left\lceil \frac{2^{r_t}}{r_t+1} \right\rceil - 1$, the following three properties are satisfied:

1) for any $i \in [\ell]$, $|T^{(i)}| = r_t$;

$$T^{(i)} = \left\{ t_1^{(i)}, t_2^{(i)}, ..., t_{r_t}^{(i)} \right\}$$

2) for any $i \in [\ell]$, Boolean vectors in are linearly independent over the finite field $\mathbb{F}_2$; and

3)

$$\bigcup_{i \in [\ell]} T^{(i)} = \{0,1\}^{r_t} - \{0^{r_t}\}.$$

For any n-bit vector $x \in \{0,1\}^{r_t}$, a set $S_x = \{x \oplus e_1, x \oplus e_2, ..., x \oplus e_{r_t}\}$ is defined. First, a set $L \subseteq \{0,1\}^{r_t}$ that satisfies $|L| \leq 2 \left\lceil \frac{2^{r_t}}{r_t+1} \right\rceil$ is constructed, and $\{0,1\}^{r_t} = (\bigcup_{x \in L} S_x) \cup L$. $k = \lceil \log(r_t + 1) \rceil$. For $t \in [r_t]$, $k$ bit binary of $t \in [r_t]$ is represented as $t_k t_{k-1} ... t_2 t_1$, where $t_1, ..., t_k \in \{0,1\}$, and $t = \sum_{i=1}^{k} t_i 2^{i-1}$ is satisfied. The overscore is used to represent a column vector corresponding to the integer, that is:

$$\bar{t} = [t_1, t_2, ..., t_k]^T \in \{0,1\}^k$$

A Boolean matrix $H$ with a scale of $k \times r_t$ is defined, including a vector $\bar{1}, \bar{2}, ..., \bar{r_t}$, that is:

$$H = [\bar{1}, \bar{2}, ..., \bar{r_t}] \in \{0,1\}^{k \times r_t}$$

A $k$ dimensional identity matrix $I_k = [\overline{2^0}, \overline{2^1}, ..., \overline{2^{k-1}}]$ is a submatrix of a matrix H, and therefore, rank(H) = k. The following sets are defined:

$$L^{(0)} = \{x \in \{0,1\}^{r_t}: Hx = 0^k\}, \qquad L^{(1)} = \{x \in \{0,1\}^{r_t}: Hx = 1^k\} \quad (13.)$$

$$A^{(0)} = \{x \in \{0,1\}^{r_t}: (Hx)_k = 0\}, \qquad A^{(1)} = \{x \in \{0,1\}^{r_t}: (Hx)_k = 1\} \quad (14.)$$

For each $x \in \{0,1\}^{r_t}$, the last bit of $Hx$ is 0 or 1, and therefore $A^{(0)} \cup A^{(1)} = \{0,1\}^{r_t}$. Similarly, for any $b \in \{0,1\}^{r_t}$, a vector $x$ in $L^{(b)}$ satisfies that every bit in $Hx$ is b, and the vector $x$ in $A^{(b)}$ satisfies that the last bit in $Hx$ is b, and therefore, $L^{(b)} \subseteq A^{(b)}$.

Next, it is proved that $A^{(0)} \subseteq L^{(0)} \cup (\cup_{x \in L^{(0)}} S_x)$ and $A^{(1)} \subseteq L^{(1)} \cup (\cup_{x \in L^{(1)}} S_x)$.

For any $y \in A^{(0)} - L^{(0)}$, it is considered that $\bar{t} = Hy$. Because $\bar{t}$ satisfies $\bar{t}_k = 0$ and $t_{k-1} \ldots t_1 \neq 0^{k-1}$,

$$1 \leq t \leq \sum_{i=1}^{k-1} 2^{i-1} < 2^{k-1} = 2^{\lceil \log(r_t+1) \rceil - 1} < 2^{\log(r_t+1)} = r_t + 1$$

Therefore $1 \leq t \leq r_t$, and the following equation may be obtained by using $He_t = \bar{t}$:

$$H(y \oplus e_t) = Hy \oplus He_t = \bar{t} \oplus \bar{t} = 0^k$$

Therefore, $y \oplus e_t \in L^{(0)}$.

That is, for any $y \in A^{(0)} - L^{(0)}$, there is $x \in L^{(0)}$. For a specific integer $t \in [r_t]$, $y = x \oplus e_t$ is satisfied. Therefore,

$$A^{(0)} \subseteq L^{(0)} \cup \left( \cup_{x \in L^{(0)}, t \in [r_t]} \{x \oplus e_t\} \right) = L^{(0)} \cup \left( \cup_{x \in L^{(0)}} S_x \right)$$

For any $y \in A^{(1)} - L^{(1)}$, it is considered that $\bar{t} = Hy$ satisfies $\bar{t}_k = 1$ and $t_{k-1} \ldots t_1 \neq 1^{k-1}$. An order of value of the corresponding integer $t$ may be out of a range of $[r_t]$. To handle this case, $\bar{t}' = \bar{t} \oplus 1^k$ is defined (and $t'$ is an integer corresponding to the vector $\bar{t}'$). Now, $\bar{t}'_k = 0$ and $t'_{k-1} \ldots t'_1 \neq 0^{k-1}$, and therefore, $t' \in [r_t]$. Therefore, $He_{t'} = \bar{t}'$ may also be obtained, so as to obtain:

$$H(y \oplus e_{t'}) = Hy \oplus He_{t'} = \bar{t} \oplus \bar{t}' = \bar{t} \oplus \bar{t} \oplus 1^k = 1^k$$

Therefore, $y \oplus e_{t'} \in L^{(1)}$, and

$$A^{(1)} \subseteq L^{(1)} \cup \left( \cup_{x \in L^{(1)}, t' \in [r_t]} \{x \oplus e_{t'}\} \right) = L^{(1)} \cup \left( \cup_{x \in L^{(1)}} S_x \right)$$

$L = L^{(0)} \cup L^{(1)}$, then:

$$\{0,1\}^{r_t} = A^{(0)} \cup A^{(1)} \subseteq L^{(0)} \cup \left( \cup_{x \in L^{(0)}} S_x \right) \cup L^{(1)} \cup \left( \cup_{x \in L^{(1)}} S_x \right)$$

$$= L \cup \left( \cup_{x \in L} S_x \right) \subseteq \{0,1\}^{r_t}$$

The property of the matrix $H$ is reviewed: over the finite field $\mathbb{F}_2$, rank(H) = k. Therefore, for any $b \in \{0,1\}^{r_t}$, an order of values of a solution set $L^{(b)}$ is $\left| L^{(b)} \right| \leq 2^{r_t - k} \leq \left\lceil \frac{2^{r_t}}{r_t+1} \right\rceil$. Therefore, $|L| = \left| L^{(0)} \right| + \left| L^{(1)} \right| \leq 2 \left\lceil \frac{2^{r_t}}{r_t+1} \right\rceil$.

Because the set $L$ is constructed, $L$ satisfies that a value of the set is at most $2 \left\lceil \frac{2^{r_t}}{r_t+1} \right\rceil$, and $L \cup (\cup_{x \in L} S_x) = \{0,1\}^{r_t}$. Next, the set $L$ is used to construct a set that satisfies the foregoing three properties.

Because $0^k$ is a solution of $Hx = 0^k$, $0^k$ satisfies $0^k \in L^{(0)} \subseteq L$. Vectors in a set $S_0^k = \{e_1, e_2, \ldots, e_{r_t}\}$ are linearly independent. For any $x \in L$ and $x \neq 0^k$, two linearly independent sets of Boolean vectors $S_x^{(0)}$ and $S_x^{(1)}$ are constructed.

Because over the finite field $\mathbb{F}_2$, rank$[x \oplus e_1, x \oplus e_2, ..., x \oplus e_{r_t}] \geq r_t - 1$, $r_t - 1$ linearly independent vectors may be selected from $S_x$ to form a set $S_x^{(0)} \subseteq S_x$. $S_x^{(1)} = \left(S_x - S_x^{(0)} - \{0^{r_t}\}\right) \cup \{x\}$. It is not difficult to verify that if $x = e_j$ is satisfied for a specific integer $j \in [r_t]$, then

$$S_x^{(1)} = \{x\} = \{e_j\}$$

; and if $x \notin \{0^n, e_1, e_2, ..., e_{r_t}\}$, then there is an integer $j \in [r_t]$, and

$$S_x^{(1)} = \{x, x \oplus e_j\}.$$

In either case, vectors in a set $S_x^{(1)}$ are linearly independent, and satisfy

$$S_x^{(0)} \cup S_x^{(1)} = S_x \cup \{x\} - \{0^{r_t}\}$$

. Therefore, for any $b \in \{0,1\}$, a set $S_x^{(b)}$ may be extended to a linearly independent set $T_x^{(b)}$ with a value of $r_t$ by adding a vector to the set $S_x^{(b)}$. $L \cup (\cup_{x \in L} S_x) = \{0,1\}^{r_t}$ has been proved before, and therefore

$$\{0,1\}^{r_t} - \{0^{r_t}\} = (\cup_{x \in L} S_x) \cup L - \{0^{r_t}\}$$

$$= \cup_{x \in L} (S_x \cup \{x\}) - \{0^{r_t}\}$$

$$= \left(\cup_{x \in L - \{0^{r_t}\}} (S_x \cup \{x\} - \{0^{r_t}\})\right)$$

$$= \left(\cup_{x \in L - \{0^{r_t}\}} \left(S_x^{(0)} \cup S_x^{(1)}\right)\right) \cup S_{0^{r_t}}$$

$$= \left(\cup_{x \in L - \{0^{r_t}\}} S_x^{(0)}\right)$$

$$\subseteq \left(\cup_{x \in L - \{0^{r_t}\}} T_x^{(0)}\right)$$

$$\subseteq \{0,1\}^{r_t} - \{0^{r_t}\}$$

A set $\left\{T_x^{(0)} : x \in L - \{0^{r_t}\}\right\}$ and a set $\left\{T_x^{(1)} : x \in L - \{0^{r_t}\}\right\}$ are combined with $S_{0^{r_t}}$ as the constructed set $T^{(1)}, T^{(2)}, ..., T^{(\ell)}$.

Because $|L| \leq 2\left\lceil\frac{2^{r_t}}{r_t+1}\right\rceil$ and $0^{r_t} \in L$, the total quantity of sets is $\ell \leq 2 \cdot \left(2\left\lceil\frac{2^{r_t}}{r_t+1}\right\rceil - 1\right) + 1 = 4\left\lceil\frac{2^{r_t}}{r_t+1}\right\rceil - 1$. Each set includes $r_t$ linearly independent vectors, and a union of all sets is exactly $\{0,1\}^{r_t} - \{0^{r_t}\}$.

The Gray path unitary operator is used for updating the quantum states of the n qubits based on the Gray code circle and bit string set F; and

bit strings included in the bit string set F use the bit strings in the bit string set T as a suffix, and use bit strings with a length of $r_c$ and including elements 0 and 1 as a prefix, where

the bit string sets F respectively corresponding to the $\ell$ unitary operators of the first type do not intersect with each other.

In the solution shown in this embodiment of this application, the quantum state of the qubit is updated through the Gray code circle, thereby implementing the quantum state preparation function in the quantum state preparation circuit.

The Gray path unitary operator includes $2^{r_c} + 1$ stages;

a first stage in the $2^{r_c} + 1$ stages is implemented by a first rotation gate; in a case that a first bit string belongs to the bit string set F, the first rotation gate is used for executing a rotation operation corresponding to the first bit string on an $i^{th}$ qubit in the last $r_t$ qubits; the first bit string is a bit string, for $i \in [r_t]$, using a bit string including an element 0 and with a length of $r_c$ as a prefix, and using an $i^{th}$ bit string in the bit string set T as a suffix;

a $p^{th}$ stage in the $2^{r_c} + 1$ stages is implemented by a first CNOT and a second rotation gate, and $p \in \{2,3, ..., 2^{r_c}\}$; for $i \in [r_t]$, a control bit of the first CNOT is on a $h_{ip}{}^{th}$ qubit in the first $r_c$ qubits, and a target bit of the first CNOT is on the $i^{th}$ qubit in the last $r_t$ qubits; $h_{ip}$ is a bit sequence of different bit elements in a p-1$^{th}$ bit string and a $p^{th}$ bit string in the Gray code circle; in a case that a second bit string belongs to the bit string set F, the second rotation gate is used for executing a rotation operation corresponding to the second bit string on an $i^{th}$ qubit in the last $r_t$ qubits; the second bit string is a bit string using the $p^{th}$ bit string in the Gray code circle as a prefix, and using the $i^{th}$ bit string in the bit string set T as a suffix;

a last stage in the $2^{r_c} + 1$ stages is implemented by a second CNOT; for $i \in [r_t]$, a control bit of the second CNOT is on a $h_{i1}{}^{th}$ qubit in the first $r_c$ qubits, and a target bit of the second CNOT is on the $i^{th}$ qubit in the last $r_t$ qubits; $h_{ip}$ is a bit sequence of different bit elements in a first bit string and a last bit string in the Gray code circle.

This embodiment of this application provides a specific solution for updating the quantum state of a qubit through a Gray code cycle, which ensures the implementability of the quantum state preparation through a quantum circuit with a low depth.

In this embodiment of this application, a depth of the Gray path unitary operator is $O(2^{r_c})$, the depth of the Gray path unitary operator may be controlled, and then the depth of the quantum state preparation circuit is controlled.

In the Gray path stage, the operator $U_{GrayPatg}$ is implemented, satisfying:

$$|x_{control}\rangle|y^{(k)}\rangle \xrightarrow{U_{GrayPath}} e^{i \sum_{s \in F_k} \langle s, x \rangle \alpha_s} |x_{control}\rangle|y^{(k)}\rangle \quad (15.)$$

, where $k \in [\ell]$, and $F_k$ is defined in equation (6).

For any $i \in [r_t]$, $c_1^i, c_2^i, ..., c_{2^{r_c}-1}^i, c_{2^{r_c}}^i$ is enabled to represent an $i$-Gray code cycle with a quantity of bits of $r_c$, and for any $i \in [r_t]$, $c_1^i = 0^{r_c}$. Any $j \in \{2,3, ..., 2^{r_c}\}$ represents subscripts of different bits of $c_{j-1}^i$ and $c_j^i$. $h_{i1}$ is enabled to represent subscripts of different bits of $c_1^i$ and $c_{2^{r_c}}^i$. For the $i$-Gray code cycle of $r_c$ bits, $h_{ij}$ is defined as follows:

$$h_{ij} = \begin{cases} r_c, & i = j = 1 \\ i - 1, & i \in \{2,3, ..., r_t\} \text{ and } j = 1 \\ \max\{k: 2^k | 2(j-1)\}, & i = 1 \text{ and } j \in \{2,3, ..., 2^{r_c}\} \\ h_{1j} + i - 1, & \text{if } h_{1j} + i - 1 \leq r_c \text{ and } j \in \{2,3, ..., 2^{r_c}\} \\ h_{1j} + i - 1 - r_c, & \text{if } h_{1j} + i - 1 > r_c \text{ and } j \in \{2,3, ..., 2^{r_c}\} \end{cases} \quad (16.)$$

The stage includes $2^{r_c} + 1$ stages.

Stage 1 includes rotation gates. For any $i \in [r_t]$, if a bit string $0^{r_c}t_i^{(k)} \in F_k$, a circuit $C_1$ applies rotation $R\left(\alpha_{0^{r_c}t_i^{(k)}}\right)$ to the $i^{th}$ bit of the target register, where $\alpha_{0^{r_c}t_i^{(k)}}$ is defined in equation (4).

In stage $p \in \{2,3, ..., 2^{r_c}\}$, a circuit $C_p$ includes two steps:

Step $p$. 1 includes CNOT gates. For each $i \in [r_t]$, a control bit of the CNOT gate is in the $h_{ip}{}^{th}$ bit of the control register, and the target bit is in the $i^{th}$ bit of the target register.

Step $p$. 2 includes rotation gates. For each $i \in [r_t]$, if $c_p^i t_i^{(k)} \in F_k$, then rotation $R\left(\alpha_{c_p^i t_i^{(k)}}\right)$ is applied to the $i^{th}$ bit of the target register.

Stage $2^{r_c} + 1$ includes CNOT gates. For each $i \in [r_t]$, a control bit of the CNOT gate is in the $h_{i1}^{th}$ bit of the control register, and the target bit is in the $i^{th}$ bit of the target register.

A depth of the circuit is $O(2^{r_c})$ and the Gray path stage $U_{GrayPath}$ (equation (15)) is implemented.

It is to be proved that for each $p \in [2^{r_c}]$, a set $F_k^{(p)}$ is defined:

$$F_k^{(p)} = \left\{ s : s \in F_k \text{ and } s = c_p^i t_i^{(k)}, i \in [r_t] \right\} (17.)$$

Defined by $F_k$ in equation (6), the set $F_k^{(p)}$ satisfies:

$$F_k^{(i)} \cap F_k^{(j)} = \emptyset, \qquad \text{where } i \neq j \in [2^{r_c}] (18.)$$

$$F_k = \cup_{p \in [2^{r_c}]} F_k^{(p)} (19.)$$

Next, how to implement the Gray path stage $U_{GrayPath}$ by using $C_1, C_2, ..., C_2^{r_c}+1$ is verified step-by-step.

$$|x_{control}\rangle |y^{(k)}\rangle$$

$$= |x_{control}\rangle |\langle 0^{r_c} t_1^{(k)}, x \rangle, \langle 0^{r_c} t_2^{(k)}, x \rangle, \cdots, \langle 0^{r_c} t_{r_t}^{(k)}, x \rangle \rangle$$

$$= |x_{control}\rangle |\langle c_1^1 t_1^{(k)}, x \rangle, \langle c_1^2 t_2^{(k)}, x \rangle, \cdots, \langle c_1^{r_t} t_{r_t}^{(k)}, x \rangle \rangle$$

$$\xrightarrow{C_1} e^{i \sum_{s \in F_k^{(1)}} \langle s, x \rangle \alpha_s} |x_{control}\rangle |\langle c_1^1 t_1^{(k)}, x \rangle, \langle c_1^2 t_2^{(k)}, x \rangle, \cdots, \langle c_1^{r_t} t_{r_t}^{(k)}, x \rangle \rangle$$

$$\xrightarrow{C_1} e^{i \sum_{s \in F_k^{(1)} \cup F_k^{(2)}} \langle s, x \rangle \alpha_s} |x_{control}\rangle |\langle c_2^1 t_1^{(k)}, x \rangle, \langle c_2^2 t_2^{(k)}, x \rangle, \cdots, \langle c_2^{r_t} t_{r_t}^{(k)}, x \rangle \rangle$$

$$\xrightarrow{C_2^{r_c}} e^{i \sum_{s \in \cup_{p \in [2^{r_c}]} F_k^{(p)}} \langle s, x \rangle \alpha_s} |x_{control}\rangle |\langle c_{2^{r_c}}^1 t_1^{(k)}, x \rangle, \langle c_{2^{r_c}}^2 t_2^{(k)}, x \rangle, \cdots, \langle c_{2^{r_c}}^{r_t} t_{r_t}^{(k)}, x \rangle \rangle$$

$$= e^{i \sum_{s \in F_k} \langle s, x \rangle \alpha_s} |x_{control}\rangle |\langle c_{2^{r_c}}^1 t_1^{(k)}, x \rangle, \langle c_{2^{r_c}}^2 t_2^{(k)}, x \rangle, \cdots, \langle c_{2^{r_c}}^{r_t} t_{r_t}^{(k)}, x \rangle \rangle$$

$$\xrightarrow{C_2^{r_c}+1} e^{i \sum_{s \in F_k} \langle s, x \rangle \alpha_s} |x_{control}\rangle |\langle c_1^1 t_1^{(k)}, x \rangle, \langle c_1^2 t_2^{(k)}, x \rangle, \cdots, \langle c_1^{r_t} t_{r_t}^{(k)}, x \rangle \rangle$$

$$= e^{i \sum_{s \in F_k} \langle s, x \rangle \alpha_s} |x_{control}\rangle |y^{(k)}\rangle$$

A circuit depth of the circuit is analyzed below. Stage 1 includes rotation gates that are applied on different bits in the target register, and therefore, the rotation gates may be implemented in one layer of circuit. In each stage $p \in$

{2,3, ..., $2^{r_c}$}, because $c^i_{p-1}$ and $c^i_p$ differ by only one bit, only one CNOT gate needs to be constructed $\langle c^i_p t^{(k)}_i, x \rangle$ from a function $\langle c^i_{p-1} t^{(k)}_i, x \rangle$. A control bit of the CNOT gate is in the $h_{ip}$th qubit of the control register, and a target bit is in the $i$th qubit of the target register. It may be learnt from equation (16), subscripts $h_{1p}$, $h_{2p}$, ...,$h_{r_t p}$ of the control bits are all different. Therefore, the CNOT gate in step $p.1$ may be implemented in one layer of circuit. The rotation gate in step $p.2$ may be applied in different qubits, and therefore may also be implemented in one layer of circuit. Similarly, stage $2^{r_c} + 1$ may also be implemented in one layer of circuit. Therefore, a total circuit depth in the Gray path stage is at most $1 + 2 \cdot (2^{r_c} - 1) + 1 = 2 \cdot 2^{r_c}$.

Therefore, a depth of the operator $\mathcal{G}_k$ is $O(2^{r_c}) + O(r_t/\log r_t) = O(2^{r_c})$.

Step 406. Replace the N qubit uniform control gates with the diagonal unitary matrix and the single bit gate that are obtained in a recursive manner, to obtain the quantum state preparation circuit.

In this application, the n qubits corresponding to the diagonal unitary matrix are divided into the first $r_c$ qubits and the last $r_t$ qubits. Then, the diagonal unitary matrix is transformed into the unitary operator of the first type, the unitary operator of the second type, and the diagonal unitary matrix corresponding to the first $r_c$ qubits based on the division result. The diagonal unitary matrix obtained by the transformation is continued to be transformed in a recursive manner, so as to achieve the effect of reducing the depth of the quantum state preparation circuit.

An idea of recursion is used in this application, a quantum circuit of a diagonal unitary matrix $\Lambda_n$ with no auxiliary bit is designed, and a depth is $O(2^n/n)$. A quantum state preparation circuit with a depth of $O(2^N/N)$ is obtained from the circuit. A lower bound of a depth of the quantum state preparation circuit with no auxiliary bit is $\Omega(2^N/N)$. Therefore, the circuit depth of this application is the optimal depth in the progressive sense.

As an important process, the quantum state preparation widely exists in various quantum algorithms. By improving the circuit depth of quantum state preparation circuit, the circuit depth of quantum algorithms such as a quantum machine learning algorithm, a physical system simulation algorithm, and a quantum linear system solving algorithm may be effectively reduced.

In summary, in the solution shown in this embodiment of this application, based on a quantum state intermediate preparation circuit including N qubit uniform control gates, each of the qubit uniform control gates is respectively converted into a diagonal unitary matrix and a single bit gate. Through the unitary operator of the first type and the unitary operator of the second type, the diagonal unitary matrix is implemented in a recursive manner, thereby reducing a depth of the quantum state preparation circuit.

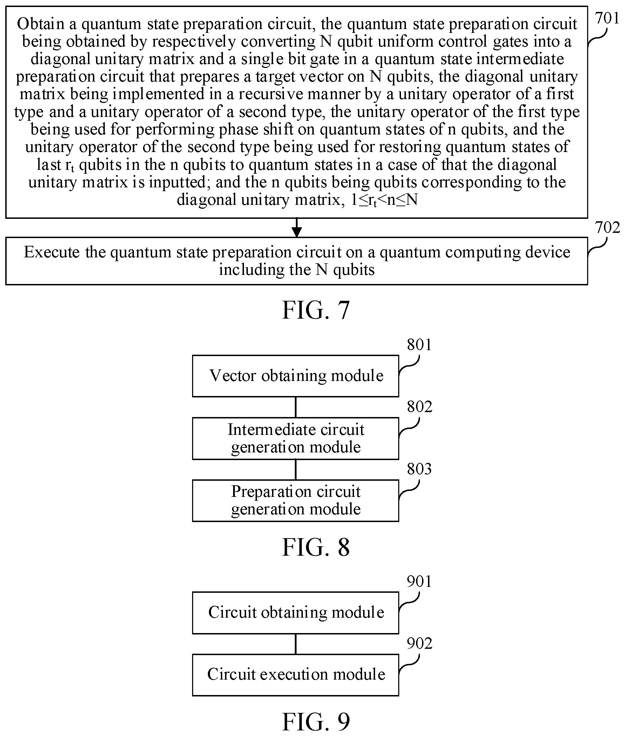

FIG. 7 is a flowchart of a quantum state preparation method according to an embodiment of this application. An execution entity of each step of the method may be a computer device or a quantum computer. The method may include the following steps:

Step 701. Obtain a quantum state preparation circuit, the quantum state preparation circuit being obtained by respectively converting N qubit uniform control gates into a diagonal unitary matrix and a single bit gate in a quantum state intermediate preparation circuit that prepares a target vector on N qubits, the diagonal unitary matrix being implemented in a recursive manner by a unitary operator of a first type and a unitary operator of a second type, the unitary operator of the first type being used for performing phase shift on quantum states of n qubits, and the unitary operator of the second type being used for restoring quantum states of last $r_t$ qubits in the n qubits to quantum states in a case of that the diagonal unitary matrix is inputted; and the n qubits being qubits corresponding to the diagonal unitary matrix, $1 \leq r_t \leq n \leq N$, and $r_t$ and n are integers.

Step 702. Execute the quantum state preparation circuit on a quantum computing device including the N qubits.

For a generation process of the quantum state preparation circuit, reference may be made to a solution in the embodiment shown in FIG. 2 or FIG. 4, which is not repeated herein.

In summary, in the solution shown in this embodiment of this application, based on a quantum state intermediate preparation circuit including N qubit uniform control gates, each of the qubit uniform control gates is respectively converted into a diagonal unitary matrix and a single bit gate. Through the unitary operator of the first type and the unitary operator of the second type, the diagonal unitary matrix is implemented in a recursive manner, and a quantum state preparation circuit with a circuit depth close to a lower bound of a theoretical depth can be constructed, thereby reducing a depth of the quantum state preparation circuit.

FIG. 8 is a block diagram of a quantum state preparation circuit generation apparatus according to an embodiment of this application. The apparatus has a function of implementing an example of the quantum state preparation circuit generation method. As shown in FIG. 8, the apparatus may include:

a vector obtaining module 801, configured to obtain a target vector;

an intermediate circuit generation module 802, configured to generate a quantum state intermediate preparation circuit for preparing the target vector on N qubits, the quantum state intermediate preparation circuit including N qubit uniform control gates, and N being a positive integer greater than or equal to 2; and

a preparation circuit generation module 803, configured to respectively convert the N qubit uniform control gates into a diagonal unitary matrix and a single bit gate, to obtain a quantum state preparation circuit for preparing the target vector on the N qubits,

the diagonal unitary matrix being implemented in a recursive manner by a unitary operator of a first type and a unitary operator of a second type; the unitary operator of the first type being used for performing phase shift on quantum states of n qubits, and the unitary operator of the second type being used for restoring quantum states of last $r_t$ qubits in the n qubits to quantum states in a case that the diagonal unitary matrix is inputted; and the n qubits being qubits corresponding to the diagonal unitary matrix, $1 \leq r_t \leq n \leq N$, and $r_t$ and n being integers.

In a possible implementation, the preparation circuit generation module 803 is configured to:

divide n qubits corresponding to a target diagonal unitary matrix into first $r_c$ qubits and last $r_t$ qubits, where a value of $r_c$ is $\lceil n/2 \rceil$, and a value of $r_t$ is $\lfloor n/2 \rfloor$; and the target diagonal unitary matrix is a qubit diagonal unitary matrix obtained by decomposing any one of the qubit uniform control gates;

convert the target diagonal unitary matrix into $\ell$ unitary operators of the first type, a unitary operator of the second type, and a first diagonal unitary matrix corresponding to the first $r_c$ qubits, where $$\ell \leq 4 \left\lceil \frac{2^{r_t}}{r_t+1} \right\rceil - 1$$, and $\ell$ is an integer;

convert, in a recursive manner, the first diagonal unitary matrix as a new target diagonal unitary matrix into unitary operators of the first type, unitary operators of the second type, and a new first diagonal unitary matrix; and

replace the N qubit uniform control gates with the diagonal unitary matrix and the single bit gate that are obtained in a recursive manner, to obtain the quantum state preparation circuit.

In a possible implementation, the unitary operator of the first type includes a generated unitary operator and a Gray path unitary operator;

the generated unitary operator is used for converting a computing base into invertible linear transformation over a finite field on the last $r_t$ qubits; and

the Gray path unitary operator is used for implementing the phase shift on the quantum states of the n qubits through a Gray code circle whose quantity of bits is $r_c$.

In a possible implementation, the generated unitary operator is used for updating the quantum states of the last $r_t$ qubits by bit string set T; and
the bit string set T includes bit strings with a length of $r_t$ and including elements 0 and 1, and the bit strings included in the bit string set T are linearly independent.
In a possible implementation, the generated unitary operator is implemented by a controlled-NOT gate CNOT.
In a possible implementation, a depth of the generated unitary operator is $O(r_t / \log r_t)$.
In a possible implementation, the Gray path unitary operator is used for updating the quantum states of the n qubits based on the Gray code circle and bit string set F; and

bit strings included in the bit string set F use the bit strings in the bit string set T as a suffix, and use bit strings with a length of $r_c$ and including elements 0 and 1 as a prefix, where

the bit string sets F respectively corresponding to the $\ell$ unitary operators of the first type do not intersect with each other.

In a possible implementation, the Gray path unitary operator includes $2^{r_c} + 1$ stages;

a first stage in the $2^{r_c} + 1$ stages is implemented by a first rotation gate; in a case that a first bit string belongs to the bit string set F, the first rotation gate is used for executing a rotation operation corresponding to the first bit string on an $i^{th}$ qubit in the last $r_t$ qubits; the first bit string is a bit string, for $i \in [r_t]$, using a bit string including an element 0 and with a length of $r_c$ as a prefix, and using an $i^{th}$ bit string in the bit string set T as a suffix;

a $p^{th}$ stage in the $2^{r_c} + 1$ stages is implemented by a first CNOT and a second rotation gate, and $p \in \{2,3, ..., 2^{rc}\}$; for $i \in [r_t]$, a control bit of the first CNOT is on a $h_{ip}{}^{th}$ qubit in the first $r_c$ qubits, and a target bit of the first CNOT is on the $i^{th}$ qubit in the last $r_t$ qubits; $h_{ip}$ is a bit sequence of different bit elements in a p-1$^{th}$ bit string and a $p^{th}$ bit string in the Gray code circle; in a case that a second bit string belongs to the bit string set F, the second rotation gate is used for executing a rotation operation corresponding to the second bit string on the $i^{th}$ qubit in the last $r_t$ qubits; the second bit string is a bit string using the $p^{th}$ bit string in the Gray code circle as a prefix, and using the $i^{th}$ bit string in the bit string set T as a suffix;

a last stage in the $2^{r_c} + 1$ stages is implemented by a second CNOT; for $i \in [r_t]$, a control bit of the second CNOT is on a $h_{i1}{}^{th}$ qubit in the first $r_c$ qubits, and a target bit of the second CNOT is on the $i^{th}$ qubit in the last $r_t$ qubits; and $h_{ip}$ is a bit sequence of different bit elements in a first bit string and a last bit string in the Gray code circle.

In a possible implementation, a depth of the Gray path unitary operator is $O(2^{r_c})$.

In a possible implementation, the unitary operator of the second type is implemented by a CNOT with a depth of $O(r_t / log r_t)$.

In summary, in the solution shown in this embodiment of this application, based on a quantum state intermediate preparation circuit including N qubit uniform control gates, each of the qubit uniform control gates is respectively converted into a diagonal unitary matrix and a single bit gate. Through the unitary operator of the first type and the unitary operator of the second type, the diagonal unitary matrix is implemented in a recursive manner, and a quantum state preparation circuit with a circuit depth close to a lower bound of a theoretical depth can be constructed, thereby reducing a depth of the quantum state preparation circuit.

FIG. 9 is a block diagram of a quantum state preparation apparatus according to an embodiment of this application. The apparatus has a function of implementing an example of the quantum state preparation method. As shown in FIG. 9, the apparatus may include:

a circuit obtaining module 901, configured to obtain a quantum state preparation circuit, the quantum state preparation circuit being obtained by respectively converting N qubit uniform control gates into a diagonal unitary matrix and a single bit gate in a quantum state intermediate preparation circuit that prepares a target vector on N qubits, the diagonal unitary matrix being implemented in a recursive manner by a unitary operator of a first type and a unitary operator of a second type, the unitary operator of the first type being used for performing phase shift on quantum states of n qubits, and the unitary operator of the second type being used for restoring quantum states of last $r_t$ qubits in the n qubits to quantum states in a case that the diagonal unitary matrix is inputted, the n qubits being qubits corresponding to the diagonal unitary matrix, $1 \leq r_t \leq n \leq N$, and $r_t$ and n being integers; and

a circuit execution module 902, configured to execute the quantum state preparation circuit on a quantum computing device including the N qubits.

In summary, in the solution shown in this embodiment of this application, based on a quantum state intermediate preparation circuit including N qubit uniform control gates, each of the qubit uniform control gates is respectively converted into a diagonal unitary matrix and a single bit gate. Through the unitary operator of the first type and the unitary operator of the second type, the diagonal unitary matrix is implemented in a recursive manner, and a quantum state preparation circuit with a circuit depth close to a lower bound of a theoretical depth can be constructed, thereby reducing a depth of the quantum state preparation circuit.

When the apparatus provided in the foregoing embodiments implements functions of the apparatus, it is illustrated with an example of division of each functional module. In the practical application, the function distribution may be finished by different functional modules according to the requirements, that is, the internal structure of the device is divided into different functional modules, to implement all or some of the functions described above. In addition, the apparatus and method embodiments provided in the foregoing embodiments belong to one conception. For the specific implementation process, refer to the method embodiments, and details are not described herein again.

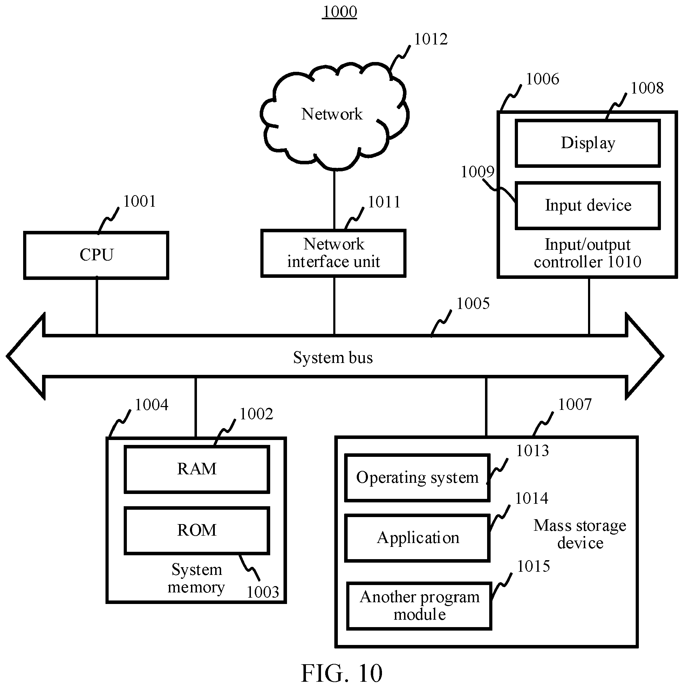

FIG. 10 is a structural block diagram of a computer device according to an embodiment of this application. The computer device may be configured to implement the method provided in the foregoing embodiments. For example, the computer device is a classic computer:

the computer device 1000 includes a central processing unit (CPU), a graphics processing unit (GPU), and a field programmable gate array (FPGA) 1001, including a system memory 1004 of a random access memory (RAM) 1002 and a read only memory (ROM) 1003, and a system bus 1005 connecting the system memory 1004 and the CPU 1001. The computer device 1000 further includes a basic input/output system (I/O system) 1006 configured to transmit information between components in the server, and a mass storage device 1007 configured to store an operating system 1013, an application program 1014, and another program module 1015.

The basic I/O system 1006 includes a display 1008 configured to display information and an input device 1009 such as a mouse or a keyboard that is used for inputting information by a user. The display 1008 and the input device 1009 are both connected to the CPU 1001 by using an input/output controller 1010 connected to the system bus 1005. The basic I/O system 1006 may further include the input/output controller 1010 to receive and process inputs from a plurality of other devices such as a keyboard, a mouse, and an electronic stylus. Similarly, the input/output controller 1010 further provides an output to a display screen, a printer or another type of output device.

The mass storage device 1007 is connected to the CPU 1001 by using a mass storage controller (not shown) connected to the system bus 1005. The mass storage device 1007 and a computer-readable medium associated with the large-capacity storage device provide non-volatile storage to the computer device 1000. That is, the mass storage device 1007 may include a computer-readable medium (not shown) such as a hard disk or a compact disc read-only memory (CD-ROM) drive.

In general, the computer-readable medium may include a computer storage medium and a communication medium. The computer storage medium includes volatile and non-volatile media, and removable and non-removable media implemented by using any method or technology and configured to store information such as a computer-readable instruction, a data structure, a program module, or other data. The computer storage medium includes a RAM, a ROM, an erasable programmable ROM (EPROM), an electrically erasable programmable ROM (EEPROM), a flash memory or another solid-state memory technology, a CD-ROM, a digital versatile disc (DVD) or another optical memory, a tape cartridge, a magnetic cassette, a magnetic disk memory, or another magnetic storage device. Certainly, a person skilled in the art may know that the computer storage medium is not limited to the foregoing types. The system memory 1004 and the mass storage device 1007 may be collectively referred to as a memory.

According to the embodiments of this application, the computer device 1000 may further be connected, through a network such as the Internet, to a remote computer on the network and run. That is, the computer device 1000 may be connected to a network 1012 by using a network interface unit 1011 connected to the system bus 1005, or may be connected to another type of network or a remote computer system (not shown) by using a network interface unit 1011.

The memory further includes at least one computer instruction, the at least one computer instruction being stored in the memory, and being configured to be executed by one or more processors to implement the quantum state preparation circuit generation method or the quantum state preparation method as described above.

In an exemplary embodiment, a computer-readable storage medium is further provided, storing at least one computer instruction, the at least one computer instruction being executed by a processor to implement the quantum state preparation circuit generation method or the quantum state preparation method as described above.

Optionally, the computer-readable storage medium may include: a read-only memory (ROM), a random-access memory (RAM), a solid state drive (SSD), an optical disc, or the like. The RAM may include a resistance random access memory (ReRAM) and a dynamic random access memory (DRAM).

In an exemplary embodiment, a computer program product or a computer program is further provided. The computer program product or the computer program includes computer instructions, and the computer instructions are stored in a computer-readable storage medium. A processor of a computer device reads the computer instruction from the computer-readable storage medium, and the processor executes the computer instruction, to cause the computer device to perform the method according to the foregoing embodiments.

In an exemplary embodiment, a quantum operation chip is further provided, and the quantum operation chip is used in a computer device to implement the method according to the foregoing embodiments.

In an exemplary embodiment, a quantum computer is further provided. The quantum computer is configured to implement the method according to the foregoing embodiments.

It is to be understood that "plurality of" mentioned in the specification means two or more. "And/or" describes an association relationship for describing associated objects and represents that three relationships may exist. For example, A and/or B may represent the following three cases: only A exists, both A and B exist, and only B exists. The character "/" in this specification generally indicates an "or" relationship between the associated objects. In addition, the step numbers described in this specification merely exemplarily show a possible execution sequence of the steps. In some other embodiments, the steps may not be performed according to the number sequence. For example, two steps with different numbers may be performed simultaneously, or two steps with different numbers may be performed according to a sequence contrary to the sequence shown in the figure. This is not limited in the embodiments of this application.

The foregoing descriptions are merely exemplary embodiments of this application, but are not intended to limit this application. Any modification, equivalent replacement, or improvement made within the spirit and principle of this application shall fall within the protection scope of this application.

**Claims**

1. A quantum state preparation circuit generation method, performed by a computer device, the method comprising:

   obtaining a target vector;
   generating a quantum state intermediate preparation circuit for preparing the target vector on N qubits, the quantum state intermediate preparation circuit comprising N qubit uniform control gates, and N being a positive integer greater than or equal to 2; and
   respectively converting each of the N qubit uniform control gates into a diagonal unitary matrix and a single bit gate, to obtain a quantum state preparation circuit for preparing the target vector on the N qubits,
   the diagonal unitary matrix being implemented in a recursive manner by a unitary operator of a first type and a unitary operator of a second type; the unitary operator of the first type being used for performing phase shift on quantum states of n qubits, and the unitary operator of the second type being used for restoring quantum states of last $r_t$ qubits in the n qubits to quantum states in a case that the diagonal unitary matrix is inputted; and the n qubits being qubits corresponding to the diagonal unitary matrix, $1 \leq r_t \leq n \leq N$, and $r_t$ and n being integers.

2. The method according to claim 1, wherein the respectively converting each of the N qubit uniform control gates into a diagonal unitary matrix and a single bit gate, to obtain a quantum state preparation circuit for preparing the target vector on the N qubits comprises:

   dividing n qubits corresponding to a target diagonal unitary matrix into first $r_c$ qubits and last $r_t$ qubits, wherein a value of $r_c$ is $\lceil n/2 \rceil$, and a value of $r_t$ is $\lfloor n/2 \rfloor$; and the target diagonal unitary matrix is a diagonal unitary matrix obtained by decomposing any one of the qubit uniform control gates;
   converting the target diagonal unitary matrix into $\ell$ unitary operators of the first type, a unitary operator of the second type, and a first diagonal unitary matrix corresponding to the first $r_c$ qubits, wherein $\ell \leq 4 \left\lceil \frac{2^{r_t}}{r_t+1} \right\rceil - 1$, and $\ell$ is an integer;
   converting, in a recursive manner, the first diagonal unitary matrix as a new target diagonal unitary matrix into unitary operators of the first type, unitary operators of the second type, and a new first diagonal unitary matrix; and
   replacing the N qubit uniform control gates with the diagonal unitary matrix and the single bit gate that are obtained in a recursive manner, to obtain the quantum state preparation circuit.

3. The method according to claim 2, wherein the unitary operator of the first type comprises a generated unitary operator and a Gray path unitary operator;

   the generated unitary operator is used for converting a computing base into invertible linear transformation over a finite field on the last $r_t$ qubits; and
   the Gray path unitary operator is used for implementing the phase shift on the quantum states of the n qubits through a Gray code circle whose quantity of bits is $r_c$.

4. The method according to claim 3, wherein the generated unitary operator is used for updating the quantum states of the last $r_t$ qubits through a bit string set T; and
   the bit string set T comprises bit strings with a length of $r_t$ and comprising elements 0 and 1, and the bit strings comprised in the bit string set T are linearly independent.

5. The method according to claim 3 or 4, wherein the generated unitary operator is implemented by a controlled-NOT gate CNOT.

6. The method according to claim 3 or 4, wherein a depth of the generated unitary operator is $O(r_t/\log r_t)$.

7. The method according to claim 4, wherein the Gray path unitary operator is used for updating the quantum states of the n qubits based on the Gray code circle and a bit string set F; and

 bit strings comprised in the bit string set F use the bit strings in the bit string set T as a suffix, and use bit strings with a length of $r_c$ and comprising elements 0 and 1 as a prefix, wherein
 the bit string sets F respectively corresponding to the $\ell$ unitary operators of the first type do not intersect with each other.

8. The method according to claim 7, wherein the Gray path unitary operator comprises $2^{r_c} + 1$ stages;

 a first stage in the $2^{r_c} + 1$ stages is implemented by a first rotation gate; in a case that a first bit string belongs to the bit string set F, the first rotation gate is used for executing a rotation operation corresponding to the first bit string on an $i^{th}$ qubit in the last $r_t$ qubits; the first bit string is a bit string, for $i \in [r_t]$, using a bit string comprising an element 0 and with a length of $r_c$ as a prefix, and using an $i^{th}$ bit string in the bit string set T as a suffix;
 a $p^{th}$ stage in the $2^{r_c} + 1$ stages is implemented by a first CNOT and a second rotation gate, and $p \in \{2,3, ..., 2^{r_c}\}$; for $i \in [r_t]$, a control bit of the first CNOT is on a $h_{ip}^{th}$ qubit in the first $r_c$ qubits, and a target bit of the first CNOT is on the $i^{th}$ qubit in the last $r_t$ qubits; $h_{ip}$ is a bit sequence of different bit elements in a p-1$^{th}$ bit string and a $p^{th}$ bit string in the Gray code circle; in a case that a second bit string belongs to the bit string set F, the second rotation gate is used for executing a rotation operation corresponding to the second bit string on the $i^{th}$ qubit in the last $r_t$ qubits; the second bit string is a bit string using the $p^{th}$ bit string in the Gray code circle as a prefix, and using the $i^{th}$ bit string in the bit string set T as a suffix;
 a last stage in the $2^{r_c} + 1$ stages is implemented by a second CNOT; for $i \in [r_t]$, a control bit of the second CNOT is on a $h_{i1}^{th}$ bit in the first $r_c$ qubits, and a target bit of the second CNOT is on the $i^{th}$ qubit in the last $r_t$ qubits; and $h_{ip}$ is a bit sequence of different bit elements in a first bit string and a last bit string in the Gray code circle.

9. The method according to claim 3, 7, or 8, wherein a depth of the Gray path unitary operator is $O(2^{r_c})$.

10. The method according to claim 2, 3, 4, 7, or 8, wherein the unitary operator of the second type is implemented by a CNOT with a depth of $O(r_t/\log r_t)$.

11. A quantum state preparation method, performed by a computer device or a quantum computer, the method comprising:

 obtaining a quantum state preparation circuit, the quantum state preparation circuit being obtained by respectively converting N qubit uniform control gates into a diagonal unitary matrix and a single bit gate in a quantum state intermediate preparation circuit that prepares a target vector on N qubits, the diagonal unitary matrix being implemented in a recursive manner by a unitary operator of a first type and a unitary operator of a second type, the unitary operator of the first type being used for performing phase shift on quantum states of n qubits, and the unitary operator of the second type being used for restoring quantum states of last $r_t$ qubits in the n qubits to quantum states in a case that the diagonal unitary matrix is inputted; and the n qubits being qubits corresponding to the diagonal unitary matrix, $1 \leq r_t \leq n \leq N$, and $r_t$ and n being integers; and
 executing the quantum state preparation circuit on a quantum computing device comprising the N qubits.

12. A quantum state preparation circuit generation apparatus, comprising:

 a vector obtaining module, configured to obtain a target vector;
 an intermediate circuit generation module, configured to generate a quantum state intermediate preparation circuit for preparing the target vector on N qubits, the quantum state intermediate preparation circuit comprising N qubit uniform control gates, and N being a positive integer greater than or equal to 2; and
 a preparation circuit generation module, configured to respectively convert the N qubit uniform control gates into a diagonal unitary matrix and a single bit gate, to obtain a quantum state preparation circuit for preparing the target vector on the N qubits,
 the diagonal unitary matrix being implemented in a recursive manner by a unitary operator of a first type and a unitary operator of a second type; the unitary operator of the first type being used for performing phase shift on quantum states of n qubits, and the unitary operator of the second type being used for restoring quantum states of last $r_t$ qubits in the n qubits to quantum states in a case that the diagonal unitary matrix is inputted; and the n qubits being qubits corresponding to the diagonal unitary matrix, $1 \le r_t \le n \le N$, and $r_t$ and n being integers.

13. The apparatus according to claim 12, wherein the preparation circuit generation module is configured to

divide n qubits corresponding to a target diagonal unitary matrix into first $r_c$ qubits and last $r_t$ qubits, wherein a value of $r_c$ is $\lceil n/2 \rceil$, and a value of $r_t$ is $\lfloor n/2 \rfloor$; and the target diagonal unitary matrix is a qubit diagonal unitary matrix obtained by decomposing any one of the qubit uniform control gates;
converting the target diagonal unitary matrix into $\ell$ unitary operators of the first type, a unitary operator of the second type, and a first diagonal unitary matrix corresponding to the first $r_c$ qubits, wherein $\ell \le 4 \left\lceil \frac{2^{r_t}}{r_t+1} \right\rceil - 1$, and -e is an integer;
converting, in a recursive manner, the first diagonal unitary matrix as a new target diagonal unitary matrix into unitary operators of the first type, unitary operators of the second type, and a new first diagonal unitary matrix; and replacing the N qubit uniform control gates with the diagonal unitary matrix and the single bit gate that are obtained in a recursive manner, to obtain the quantum state preparation circuit.

14. The apparatus according to claim 13, wherein the unitary operator of the first type comprises a generated unitary operator and a Gray path unitary operator;

the generated unitary operator is used for converting a computing base into invertible linear transformation over a finite field on the last $r_t$ qubits; and
the Gray path unitary operator is used for implementing the phase shift on the quantum states of the n qubits through a Gray code circle whose quantity of bits is $r_c$.

15. The apparatus according to claim 14, wherein the generated unitary operator is used for updating the quantum states of the last $r_t$ qubits through a bit string set T; and
the bit string set T comprises bit strings with a length of $r_t$ and comprising elements 0 and 1, and the bit strings comprised in the bit string set T are linearly independent.

16. The apparatus according to claim 14 or 15, wherein the generated unitary operator is implemented by a controlled-NOT gate CNOT.

17. The apparatus according to claim 14 or 15, wherein a depth of the generated unitary operator is $O(r_t/\log r_t)$.

18. The apparatus according to claim 15, wherein the Gray path unitary operator is used for updating the quantum states of the n qubits based on the Gray code circle and a bit string set F; and

bit strings comprised in the bit string set F use the bit strings in the bit string set T as a suffix, and use bit strings with a length of $r_c$ and comprising elements 0 and 1 as a prefix, wherein
the bit string sets F respectively corresponding to the $\ell$ unitary operators of the first type do not intersect with each other.

19. The apparatus according to claim 18, wherein the Gray path unitary operator comprises $2^{r_c} + 1$ stages;

a first stage in the $2^{r_c} + 1$ stages is implemented by a first rotation gate; in a case that a first bit string belongs to the bit string set F, the first rotation gate is used for executing a rotation operation corresponding to the first bit string on an $i^{th}$ qubit in the last $r_t$ qubits; the first bit string is a bit string, for $i \in [r_t]$, using a bit string comprising an element 0 and with a length of $r_c$ as a prefix, and using an $i^{th}$ bit string in the bit string set T as a suffix;
a $p^{th}$ stage in the $2^{r_c} + 1$ stages is implemented by a first CNOT and a second rotation gate, and $p \in \{2,3, ..., 2^{rc}\}$; for $i \in [r_t]$, a control bit of the first CNOT is on a $h_{ip}^{th}$ qubit in the first $r_c$ qubits, and a target bit of the first CNOT is on the $i^{th}$ qubit in the last $r_t$ qubits; $h_{ip}$ is a bit sequence of different bit elements in a p-1$^{th}$ bit string and a $p^{th}$ bit string in the Gray code circle; in a case that a second bit string belongs to the bit string set F, the second rotation gate is used for executing a rotation operation corresponding to the second bit string on the $i^{th}$ qubit in the last $r_t$ qubits; the second bit string is a bit string using the $p^{th}$ bit string in the Gray code circle as a prefix, and using the $i^{th}$ bit string in the bit string set T as a suffix;

a last stage in the $2^{r_c} + 1$ stages is implemented by a second CNOT; for $i \in [r_t]$, a control bit of the second CNOT is on a $h_{i1}{}^{th}$ bit in the first $r_c$ qubits, and a target bit of the second CNOT is on the $i^{th}$ qubit in the last $r_t$ qubits; and $h_{ip}$ is a bit sequence of different bit elements in a first bit string and a last bit string in the Gray code circle.

20. The apparatus according to claim 14, 18, or 19, wherein a depth of the Gray path unitary operator is $O(2^{r_c})$.

21. The apparatus according to claim 13, 14, 15, 18, or 19, wherein the unitary operator of the second type is implemented by a CNOT with a depth of $O(r_t/\log r_t)$.

22. A quantum state preparation apparatus, comprising:

a circuit obtaining module, configured to obtain a quantum state preparation circuit, the quantum state preparation circuit being obtained by respectively converting N qubit uniform control gates into a diagonal unitary matrix and a single bit gate in a quantum state intermediate preparation circuit that prepares a target vector on N qubits, the diagonal unitary matrix being implemented in a recursive manner by a unitary operator of a first type and a unitary operator of a second type, the unitary operator of the first type being used for performing phase shift on quantum states of n qubits, and the unitary operator of the second type being used for restoring quantum states of last $r_t$ qubits in the n qubits to quantum states in a case that the diagonal unitary matrix is inputted; and the n qubits being qubits corresponding to the diagonal unitary matrix, $1 \leq r_t < n \leq N$, and $r_t$ and n being integers; and

a circuit execution module, configured to execute the quantum state preparation circuit on a quantum computing device comprising the N qubits.

23. A quantum operation chip, configured to implement the quantum state preparation circuit generation method according to any one of claims 1 to 10, or to implement the quantum state preparation method according to claim 11.

24. A computer device comprising the quantum operation chip according to claim 23.

25. A computer device, comprising a processor and a memory, the memory storing at least one computer instruction, the at least one computer instruction being executed by the processor to implement the quantum state preparation circuit generation method according to any one of claims 1 to 10, or implement the quantum state preparation method according to claim 11.

26. A quantum computer, configured to implement the quantum state preparation method according to claim 11.

27. A computer-readable storage medium, storing at least one computer instruction, the at least one computer instruction being executed by a processor to implement the quantum state preparation circuit generation method according to any one of claims 1 to 10, or implement the quantum state preparation method according to claim 11.

28. A computer program product, comprising computer instructions, the computer instructions being executed by a processor to implement the quantum state preparation circuit generation method according to any one of claims 1 to 10, or implement the quantum state preparation method according to claim 11.

Dilution refrigerator — 12

— 14 — 13 — 11

Computer → Control device → Quantum computing device

FIG. 1

| Obtain a target vector | 21 |

↓

| Generate a quantum state intermediate preparation circuit for preparing the target vector on N qubits, the quantum state intermediate preparation circuit including N qubit uniform control gates, and N being a positive integer greater than or equal to 2 | 22 |

↓

| Respectively convert the N qubit uniform control gates into a diagonal unitary matrix and a single bit gate, to obtain a quantum state preparation circuit for preparing the target vector on the N qubits | 23 |

FIG. 2

FIG. 3

401
Obtain a target vector

402
Generate a quantum state intermediate preparation circuit for preparing the target vector on N qubits, the quantum state intermediate preparation circuit including N qubit uniform control gates, and N being a positive integer greater than or equal to 2

403
Divide n qubits corresponding to a target diagonal unitary matrix into first $r_c$ qubits and last $r_t$ qubits

404
Convert the target diagonal unitary matrix into unitary operators of the first type, a unitary operator of the second type, and a first diagonal unitary matrix corresponding to the first $r_c$ qubits

405
Convert, in a recursive manner, the first diagonal unitary matrix as a new target diagonal unitary matrix into unitary operators of the first type, unitary operators of the second type, and a new first diagonal unitary matrix

406
Replace the N qubit uniform control gates with a diagonal unitary matrix and a single bit gate that are obtained in a recursive manner, to obtain a quantum state preparation circuit.

FIG. 4

FIG. 5

FIG. 6

Obtain a quantum state preparation circuit, the quantum state preparation circuit
being obtained by respectively converting N qubit uniform control gates into a
diagonal unitary matrix and a single bit gate in a quantum state intermediate
preparation circuit that prepares a target vector on N qubits, the diagonal unitary
matrix being implemented in a recursive manner by a unitary operator of a first
type and a unitary operator of a second type, the unitary operator of the first type
being used for performing phase shift on quantum states of n qubits, and the
unitary operator of the second type being used for restoring quantum states of
last $r_t$ qubits in the n qubits to quantum states in a case of that the diagonal
unitary matrix is inputted; and the n qubits being qubits corresponding to the
diagonal unitary matrix, $1 \leq r_t < n \leq N$

701

Execute the quantum state preparation circuit on a quantum computing device
including the N qubits

702

FIG. 7

Vector obtaining module

801

Intermediate circuit
generation module

802

Preparation circuit
generation module

803

FIG. 8

Circuit obtaining module

901

Circuit execution module

902

FIG. 9

<u>1000</u>

FIG. 10

## INTERNATIONAL SEARCH REPORT

| International application No. |
|---|
| **PCT/CN2021/126485** |

**A.    CLASSIFICATION OF SUBJECT MATTER**

G06N 10/00(2022.01)i

According to International Patent Classification (IPC) or to both national classification and IPC

**B.    FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 量子态, 制备, 向量, 对角, 酉矩阵, 单比特门, 比特, quantum state, preparation, diagonal, unitary matrix, vector, single bit gate

**C.    DOCUMENTS CONSIDERED TO BE RELEVANT**

| Category* | Citation of document, with indication, where appropriate, of the relevant passages | Relevant to claim No. |
|---|---|---|
| A | CN 112232513 A (ORIGIN QUANTUM COMPUTING TECHNOLOGY CO., LTD.) 15 January 2021 (2021-01-15) description, paragraphs [0044]-[0100], and figures 1-6 | 1-28 |
| A | CN 106650808 A (BEIJING UNIVERSITY OF TECHNOLOGY) 10 May 2017 (2017-05-10) entire document | 1-28 |
| A | CN 112633507 A (ORIGIN QUANTUM COMPUTING TECHNOLOGY CO., LTD.) 09 April 2021 (2021-04-09) entire document | 1-28 |
| A | US 2020134107 A1 (MICROSOFT TECHNOLOGY LICENSING, LLC) 30 April 2020 (2020-04-30) entire document | 1-28 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 April 2022** | **29 April 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/126485**

| Patent document cited in search report | | | Publication date (day/month/year) | Patent family member(s) | | | Publication date (day/month/year) |
|---|---|---|---|---|---|---|---|
| CN | 112232513 | A | 15 January 2021 | None | | | |
| CN | 106650808 | A | 10 May 2017 | None | | | |
| CN | 112633507 | A | 09 April 2021 | None | | | |
| US | 2020134107 | A1 | 30 April 2020 | WO | 2020092601 | A1 | 07 May 2020 |
| | | | | EP | 3857466 | A1 | 04 August 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110879983